# EUROPEAN PATENT APPLICATION

(11) **EP 4 651 460 A1**
(43) Date of publication of application: **19.11.2025**
(21) Application number: 24757246.4
(22) Date of filing: 14.02.2024
(51) Int. Cl.: H04L 47/24, H04L 69/28, H04L 69/321, H04W 8/24, H04W 80/02

(54) **METHOD AND APPARATUS FOR QOS-BASED PDCP SDU DISCARD OPERATION IN WIRELESS COMMUNICATION SYSTEM**

(30) Priority: 14.02.2023 KR 20230019602
(71) Applicant: Samsung Electronics Co., Ltd., Suwon-si, Gyeonggi-do 16677 (KR)
(72) Inventor: KANG, Hyunjeong, Suwon-si, Gyeonggi-do 16677 (KR); LEE, Taeseop, Suwon-si, Gyeonggi-do 16677 (KR)
(74) Representative: Gulde & Partner
(86) International application number: PCT/KR2024/095133
(87) International publication number: WO 2024/172525

(57) **Abstract**

The disclosure relates to a 5G or 6G communication system for supporting a higher data transmission rate. According to an embodiment of the present disclosure, a method performed by a terminal in a wireless communication system is provided. The method includes receiving, from a base station, configuration information on a first timer and a second timer for packet data convergence protocol (PDCP) service data unit (SDU) discarding; obtaining a PDCP SDU from an upper layer of a PDCP entity of the terminal; in case that a protocol data unit (PDU) set to which the PDCP SDU belongs has low importance, starting the first timer for the PDCP SDU; and in case that the PDU set does not have low importance, starting the second timer for the PDCP SDU.

## Description

### [Technical Field]

The disclosure relates to an operation of a terminal in a wireless communication system. Specifically, the disclosure relates to a method and a device for efficiently providing application data traffic in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

With the advance of wireless communication systems as described above, various services can be provided, and accordingly there is a need for ways to effectively provide these services.

### [Technical Solution]

According to an embodiment of the disclosure, a method performed by a terminal in a wireless communication system is provided. The method includes receiving, from a base station, configuration information on a first timer and a second timer for packet data convergence protocol (PDCP) service data unit (SDU) discarding, obtaining a PDCP SDU from an upper layer of a PDCP entity of the terminal, in case that a protocol data unit (PDU) set to which the PDCP SDU belongs has low importance, starting the first timer for the PDCP SDU, and in case that the PDU set does not have low importance, starting the second timer for the PDCP SDU.

According to an embodiment of the disclosure, a method performed by a base station in a wireless communication system is provided. The method includes generating configuration information on a first timer and a second timer for PDCP SDU discarding, and transmitting the configuration information to a terminal. In case that a PDU set to which a PDCP SDU of a PDCP entity of the terminal belongs has low importance, the first timer is applied for the PDCP SDU, and in case that the PDU set does not have low importance, the second timer is applied for the PDCP SDU.

According to an embodiment of the disclosure, a terminal in a wireless communication system is provided. The terminal includes a transceiver and a controller. The controller is configured to receive, from a base station and through the transceiver, configuration information on a first timer and a second timer for PDCP SDU discarding, obtain a PDCP SDU from an upper layer of a PDCP entity of the terminal, in case that a PDU set to which the PDCP SDU belongs has low importance, start the first timer for the PDCP SDU, and in case that the PDU set does not have low importance, start the second timer for the PDCP SDU.

According to an embodiment of the disclosure, a base station in a wireless communication system is provided. The base station includes a transceiver and a controller. The controller is configured to generate configuration information on a first timer and a second timer for PDCP SDU discarding, and transmit the configuration information to a terminal through the transceiver. In case that a PDU set to which a PDCP SDU of a PDCP entity of the terminal belongs has low importance, the first timer is applied for the PDCP SDU, and in case that the PDU set does not have low importance, the second timer is applied for the PDCP SDU.

### [Advantageous Effects]

According to an embodiment of the disclosure, in providing a service such as eXtended Reality (XR), network resources can be more efficiently used.

### [Description of Drawings]

FIG. 1 illustrates a structure of an NR system according to an embodiment of the disclosure.
FIG. 2 illustrates a radio protocol structure in LTE and NR systems according to an embodiment of the disclosure.
FIG. 3 illustrates a configuration of a protocol data unit set according to an embodiment of the disclosure.
FIG. 4A illustrates a PDU set discarding operation on a packet data convergence protocol (PDCP) layer according to an embodiment of the disclosure.
FIG. 4B illustrates a PDU set discarding operation on a PDCP layer according to an embodiment of the disclosure.
FIG. 4C illustrates a PDU set discarding operation on a PDCP layer according to an embodiment of the disclosure.
FIG. 5 illustrates a PDU set discarding operation or a PDU discarding operation on a PDCP layer according to a PDU set integrated handling configuration in an embodiment of the disclosure.
FIG. 6 illustrates an operation of a base station configuring a PDU set discarding operation or a PDU discarding operation for a PDCP layer, based on a PDU set integrated handling configuration according to an embodiment of the disclosure.
FIG. 7 illustrates an operation of a terminal determining whether to perform a PDU set discarding operation or a PDU discarding operation on a PDCP layer, based on a PDU set integrated handling configuration according to an embodiment of the disclosure.
FIG. 8 illustrates a PDU set discarding operation or a PDU discarding operation on a PDCP layer according to a PDU set importance configuration in an embodiment of the disclosure.
FIG. 9 illustrates an operation of a base station configuring a PDU set discarding operation or a PDU discarding operation for a PDCP layer, based on a PDU set importance configuration according to an embodiment of the disclosure.
FIG. 10 illustrates an operation of a terminal determining whether to perform a PDU set discarding operation or a PDU discarding operation on a PDCP layer, based on a PDU set importance configuration according to an embodiment of the disclosure.
FIG. 11 illustrates a PDU set discarding operation or a PDU discarding operation on a PDCP layer according to a PDU set integrated handling configuration and a PDU set importance configuration in an embodiment of the disclosure.
FIG. 12 illustrates an operation of a base station configuring a PDU set discarding operation or a PDU discarding operation for a PDCP layer, based on a PDU set integrated handling configuration and a PDU set importance configuration according to an embodiment of the disclosure.
FIG. 13 illustrates an operation of a terminal determining whether to perform a PDU set discarding operation or a PDU discarding operation on a PDCP layer, based on a PDU set integrated handling configuration and a PDU set importance configuration according to an embodiment of the disclosure.
FIG. 14 illustrates a PDU discarding operation on a PDCP layer according to a PDU set importance configuration in an embodiment of the disclosure.
FIG. 15 illustrates an operation of a base station configuring a PDU discarding operation for a PDCP layer, based on a PDU set importance configuration according to an embodiment of the disclosure.
FIG. 16 illustrates an operation of a terminal performing a PDU discarding operation on a PDCP layer, based on a PDU set importance configuration according to an embodiment of the disclosure.
FIG. 17 illustrates a PDU set discarding operation on a PDCP layer according to a PDU set integrated handling configuration and a PDU set importance configuration according to an embodiment of the disclosure.
FIG. 18 illustrates an operation of a base station configuring a PDU set discarding operation for a PDCP layer, based on a PDU set integrated handling configuration and a discarding threshold configuration according to an embodiment of the disclosure.
FIG. 19 illustrates an operation of a terminal performing a PDU set discarding operation on a PDCP layer, based on a PDU set integrated handling configuration and a discarding threshold configuration according to an embodiment of the disclosure.
FIG. 20 illustrates an operation of a base station configuring a PDU set discarding operation for a PDCP layer, based on a PDU set importance configuration and a discarding threshold configuration according to an embodiment of the disclosure.
FIG. 21 illustrates an operation of a terminal processing a PDU set discarding configuration on a packet data convergence protocol (PDCP) layer according to a PDU set importance configuration according to an embodiment of the disclosure.
FIG. 22 illustrates a signaling procedure between a terminal and a base station for configuring a PDU set discarding operation on a PDCP layer of the terminal according to an embodiment of the disclosure.
FIG. 23 illustrates a structure of a UE according to an embodiment of the disclosure.
FIG. 24 illustrates a structure of a base station according to an embodiment of the disclosure.

### [Mode for Invention]

Hereinafter, embodiments of the disclosure will be described in detail with reference to the accompanying drawings. In addition, a detailed description of known functions or configurations that may make the subject matter of the disclosure unclear will be omitted. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, higher signaling refers to a signal transfer scheme from a base station to a terminal via a downlink data channel of a physical layer, or from a terminal to a base station via an uplink data channel of a physical layer. The higher signaling may also be understood as radio resource control (RRC) signaling or a media access control (MAC) control element (CE).

In the following description of the disclosure, terms and names defined in the 3rd generation partnership project new radio (3GPP NR) or 3GPP long term evolution (3GPP LTE) standards will be used for the sake of descriptive convenience. However, the disclosure is not limited by these terms and names, and may be applied in the same way to systems that conform other standards. In the disclosure, the term "gNB" may be interchangeably used with the term "eNB" for the sake of descriptive convenience. That is, a base station described as "eNB" may refer to "gNB". Furthermore, the term "terminal" may refer to not only a mobile phone, an MTC device, an NB-IoT device, and a sensor, but also other wireless communication devices.

In the following description, a base station is an entity that allocates resources to terminals, and may be at least one of a gNode B (gNB), an eNode B (eNB), a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

The disclosure relates to a method and an apparatus for packet data convergence protocol service data unit discarding (hereinafter, referred to as PDCP SDU discarding) in a next-generation wireless communication system. More specifically, the disclosure relates to a method and an apparatus wherein, when a set of protocol data units (PDUs) (hereinafter, referred to as a PDU set) corresponding to an application data unit (hereinafter, referred to as an ADU) is configured in a 3GPP 5GS, a PDCP SDU discarding operation is performed for each PDU set in order to efficiently use network radio resources.

As various PDU set QoS (quality of service) parameters available for QoS guarantee for each PDU set, the disclosure proposes a PDU set overall processing parameter and a PDU set importance (PSI) parameter, and describes a method for performing a PDU set discarding operation adaptively to various PDU set configurations. To describe the method for performing a PDU set discarding operation, a method for indicating a PDU set discarding operation for each PDU set in a PDCP layer, and a method for indicating a PDU set discarding operation for each PDU, will be described in detail.

Through the disclosure, a base station may configure control information for a PDU set discarding operation between a UE and the base station, based on PDU set QoS requirements and QoS parameters (for example, PDU set overall processing and PSI parameters) and may exchange the control information with the UE. The UE may report, to the base station (for example, gNB), whether a PDU set discarding operation is supported, through UE capability information. The base station (for example, gNB) may indicate a PDU set discarding operation to the UE with reference to the UE capability information reported by the UE, and the UE may perform the PDU set discarding operation according to the indication from the base station.

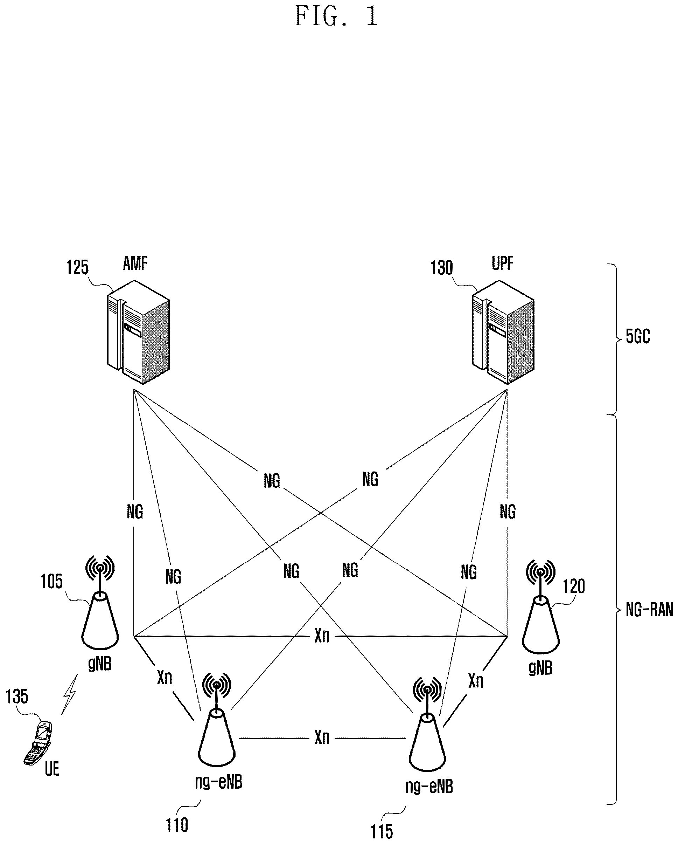

FIG. 1 illustrates a structure of an NR system according to an embodiment of the disclosure.

Referring to FIG. 1, a wireless communication system may include multiple base stations (for example, a gNB 105, an ng-eNB 110, an ng-eNB 115, and a gNB 120), an access and mobility management function (AMF) 125, and a user plane function (UPF) 130. A user equipment (hereinafter UE or terminal) 135 may access an external network through the base stations (for example, the gNB 105, the ng-eNB 110, the ng-eNB 115, and the gNB 120) and the UPF 130.

In FIG. 1, the base stations (for example, the gNB 105, the ng-eNB 110, the ng-eNB 115, and the gNB 120) may provide radio access to UEs that access the network as cellular network access nodes. That is, in order to service users' traffic, the base stations for example, the gNB 105, the ng-eNB 110, the ng-eNB 115, and the gNB 120) may collect state information, such as the UEs' buffer states, available transmission power states, and channel states, and perform scheduling accordingly, thereby supporting connections between the UEs and the core network (CN). A communication system may be divided into a user plane (UP) associated with actual user data transmission and a control plane (CP) such as connection management, and in the drawing, the gNB 105 and gNB 120 may use UP and CP technology defined in the NR technology, and although connected to the 5GC, the ng-eNB 110 and ng-eNB 115 may use UP and CP technology defined in the LTE technology. The 5GC may refer to a CN in the NR system.

The AMF 125 is a device responsible for various control functions as well as a mobility management function for a UE and may be connected to multiple base stations, and the UPF 130 may refer to a type of gateway device for providing data transmission. Although not illustrate in FIG. 1, the NR communication system may include a session management function (SMF). The SMF may manage a packet data network connection, such as a protocol data unit (PDU) session, provided to the UE.

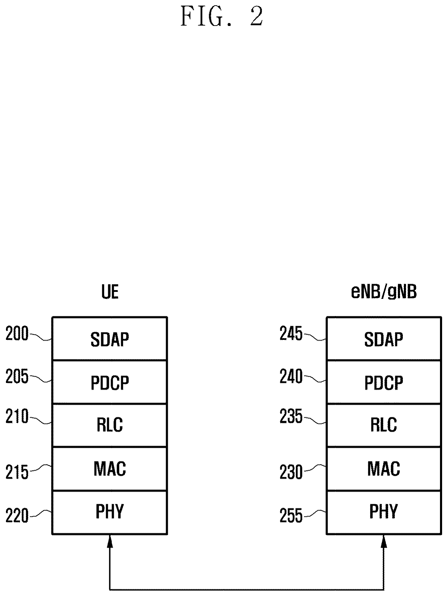

FIG. 2 illustrates a radio protocol structure in LTE and NR systems according to an embodiment of the disclosure.

Referring to FIG. 2, a radio protocol of an NR system may include a service data adaptation protocol (SDAP) 200 or 245, a packet data convergence protocol (PDCP) 205 or 240, a radio link control (RLC) 210 or 235, and a medium access controls (MAC) 215 or 230 on each of UE and gNB sides. The SDAP 200 or 245 may perform an operation for mapping each QoS flow to a specific data radio bearer (DRB), and an SDAP configuration corresponding to each DRB may be given from the higher layer (for example, RRC layer). The PDCP 205 or 240 may be responsible for operations such as IP header compression and/or reconstruction, and the RLC 210 or 235 may reconfigure a PDCP PDU into appropriate sizes. The MAC 215 or 230 may be connected to several RLC layer devices configured in a single UE, and perform operations of multiplexing RLC PDUs into an MAC PDU and demultiplexing RLC PDUs from an MAC PDU. A physical (PHY) layer 220 or 225 may perform operations of channel-coding and modulating upper layer data, producing an orthogonal frequency-division multiplexing (OFDM) symbol therefrom and transmitting the same through a radio channel, or demodulating an OFDM symbol received through the radio channel, channel-decoding the same, and delivering the same to the higher layer. In addition, the PHY layers 220 and 225 may use a hybrid automatic repeat request (HARQ) for additional error correction, and a receiving end may use one bit to transmit whether a packet transmitted by a transmitting end is received. Information regarding whether the receiving receives the packet from the transmitting end may be referred to as HARQ ACK/NACK information. In the case of the LTE system, downlink HARQ ACK/NACK information with regard to uplink data transmission may be transmitted through a physical hybrid-arq indicator channel (PHICH). In the case of the NR system, downlink HARQ ACK/NACK information in response to uplink data transmission may be transmitted through a physical dedicated control channel (PDCCH) that is used to transmit a downlink and/or uplink resource allocation or the like, and the base station may determine, through scheduling information of the UE, whether retransmission is required or new transmission is to be performed. The reason why the base station determines, through the scheduling information of the UE, whether retransmission is required or new transmission is to be performed in the NR system, unlike LTE, may be because an asynchronous HARQ is applied in the NR. Uplink HARQ ACK/NACK information in response to downlink data transmission may be transmitted through a physical uplink control channel (PUCCH) or through a physical uplink shared channel (PUSCH). The PUCCH may be generally transmitted in an uplink of a primary cell (PCell) as described below. However, if supported by the UE, HARQ ACK/NACK information with regard to a secondary cell (SCell) as described below may be transmitted, and the SCell may be referred to as a PUCCH SCell.

Although not illustrated in the drawing, a radio resource control (RRC) layer may exist as a higher layer than each PDCP layer of the UE and the base station, and the RRC layer may exchange access/measurement-related configuration control messages for radio resource control.

The PHY layer may include one or multiple frequencies/carriers, and a technology for simultaneously configuring and using multiple frequencies may be referred to as carrier aggregation (hereinafter CA). The CA refers to a technology in which, instead of using only one carrier for communication between a UE and a base station (for example, eNB or gNB), one primary carrier and one or multiple secondary carriers are additionally used and thus data capacity may be greatly increased as much as the number of secondary carriers. Meanwhile, a cell in a base station, which uses the primary carrier in LTE and NR systems, may be referred to as a primary cell or PCell, and a cell in a base station, which uses the secondary carriers, may be referred to as a secondary cell or SCell.

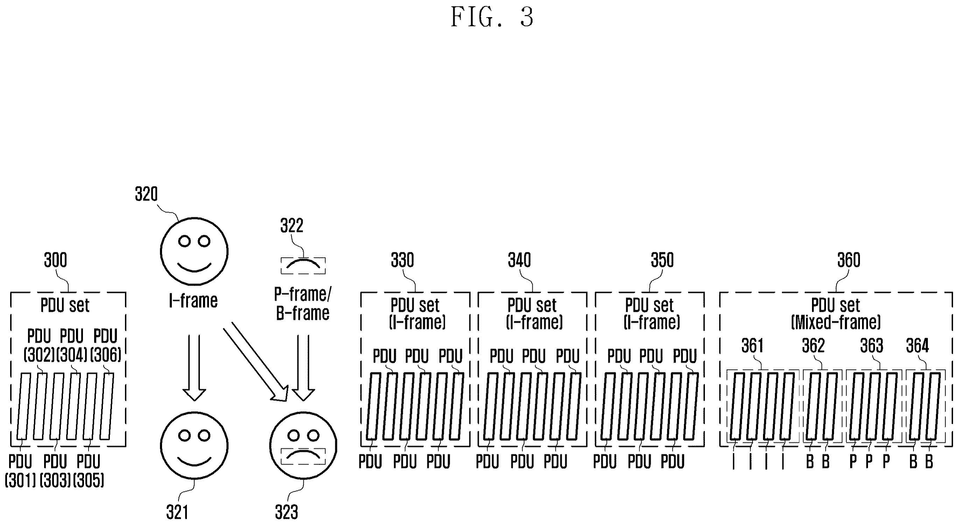

FIG. 3 illustrates a configuration of a protocol data unit set according to an embodiment of the disclosure.

Referring to FIG. 3, various types of traffic may be classified by ADUs that are the units of information distinguishable at the application level. In an embodiment, an ADU may correspond to a single picture or image, a frame of a video, or a unit of audio. The ADUs may be distinguished in units of a PDU set 300, and the PDU set 300 may be divided into one or more PDUs 301, 302, 303, 304, 305, and 306 and then be transmitted.

For example, in the case of using moving picture experts group (MPEG) standard video compression technology in video traffic, a PDU set may be configured as one of 1) a combination 330 of multiple PDUs corresponding to a single intra(I)-frame, 2) a combination 340 of multiple PDUs corresponding to a single bidirectional(B)-frame, 3) a combination 350 of multiple PDUs corresponding to a single predicted(P)-frame, and 4) a combination 360 of multiple PDUs corresponding to an ADU that includes multiple frames including an I-frame 361, B-frames 362 and 364, and/or a P-frame 363. An I-frame 320 is an independent frame and may represent a complete picture or image 321 regardless of the presence or absence of other frames. A P-frame and a B-frame 322 are frames that represent change information of the preceding I-frame 320. If the I-frame 320 is not normally received, it may be difficult to normally represent a picture or image 323 intended to be represented by the P-frame and B-frame 322. In addition, a B-frame references both an I-frame and a P-frame, and stores, as estimated data, the motions between the two frames. Therefore, not only the preceding I-frame but also the succeeding P-frame need to be normally received in order for the picture or image intended to be represented by the B-frame to be normally represented.

With reference to this diagram, for ease of explanation, the configuration of a PDU set and a PDU set discarding operation have been described using, as an example, the case of using MPEG standard video compression technology in video traffic. However, the content of the disclosure is not limited to the PDU set configuration for video traffic, and may be applied to all PDU set configurations using normal ADU units.

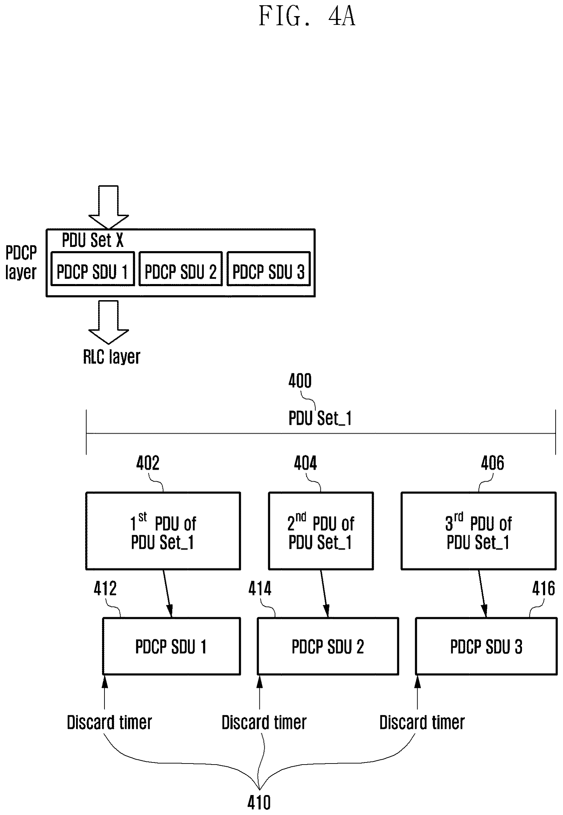

FIG. 4A to FIG. 4C illustrates a PDU set discarding operation on a packet data convergence protocol (PDCP) layer according to an embodiment of the disclosure.

When a particular PDU among PDUs configuring a PDU set is abandoned (or discarded) due to expiration of a discard timer, a PDCP layer may perform a PDU set discarding operation of abandoning the remaining PDUs configuring the PDU set so as to efficiently use wireless resources. The remaining PDUs may indicate "PDUs having not been transmitted yet" among the PDUs configuring the PDU set or "PDUs having higher sequence numbers (SNs) than those of the abandoned PDUs." In addition, the "PDU(s)" configuring the "PDU set" may indicate PDU(s) from the perspective of a PDCP upper layer and indicate PDCP SDU(s) from the perspective of the PDCP layer. This PDU set discarding operation may enable efficient use of wireless resources by, when the transmission of a PDU set becomes meaningless due to discarding any one of the PDUs configuring the PDU set, abandoning the other PDUs belonging to the PDU set.

In an embodiment, a PDU set discarding operation may be configured in units of DRBs. A particular parameter (e.g., a 1-bit indicator such as "PDU_SetDiscardEnabled" or "PDU_SetDiscard") may be newly defined in PDCP-Config of a DRB for configuring a PDU set discarding operation, and a base station may configure a PDU set discarding operation for a particular DRB through the indicator newly defined in PDCP-Config of the DRB. In addition, the base station may transfer the IDs of DRBs for which the PDU set discarding operation needs to be performed, to a UE in a type of a list, and the UE may perform the PDU set discarding operation at PDCP entities corresponding to the DRBs of the list.

In an example, a discard timer operation method on the PDCP layer may vary according to whether a PDU set discarding operation is needed.

If PDUs (i.e., PDCP SDUs) configuring a PDU set for which a PDU set discarding operation is not required to be performed arrive at the PDCP layer, a PDCP entity may operate a discard timer in the units of the PDUs (i.e., PDCP SDUs) regardless of the PDU set. Specifically, the PDCP layer may start a discard timer associated with each PDU (i.e., PDCP SDU) at the time point at which the corresponding PDU arrives at the PDCP layer. Thereafter, when the discard timer associated with each PDU expires, the PDCP layer may abandon the corresponding PDU. A more detailed operation will be described with reference to the embodiment of FIG. 4A described later.

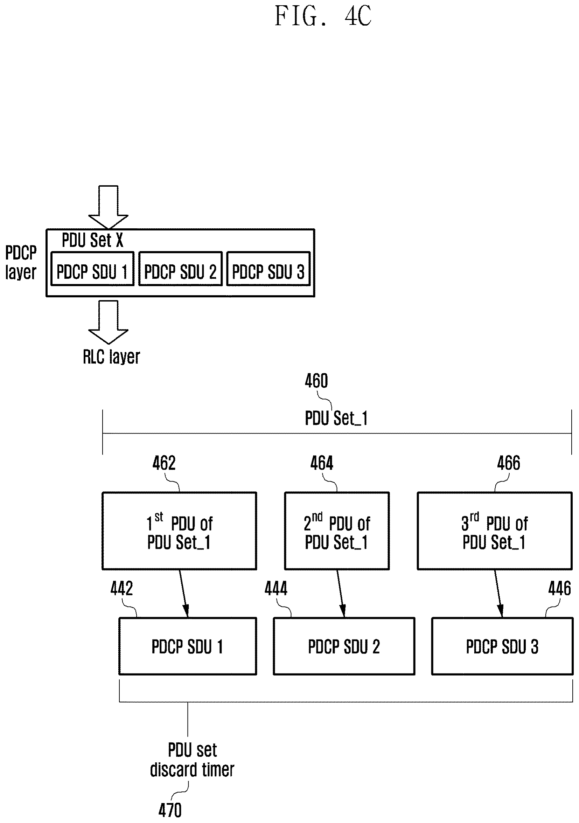

If PDUs (i.e., PDCP SDUs) configuring a PDU set corresponding to a type for which a PDU set discarding operation is required to be performed arrive at the PDCP layer, a PDCP entity may operate a discard timer in the units of PDU sets in order to perform the discarding operation in the units of PDU sets. Specifically, at the time point at which the first PDU included in a particular PDU set arrives at the PDCP layer, the PDCP entity may start a discard timer corresponding to the PDU set. Thereafter, when the discard timer corresponding to the PDU set expires, the PDCP entity may abandon the PDUs (i.e., PDCP SDUs) configuring the PDU set all together. A more detailed operation will be described with reference to FIG. 4C described later.

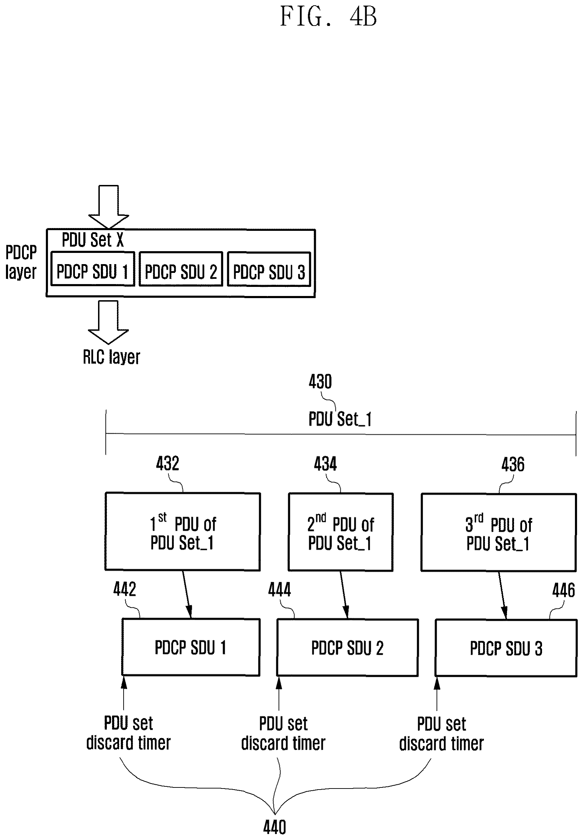

Additionally, even when PDUs (i.e., PDCP SDUs) configuring a PDU set corresponding to a type for which a PDU set discarding operation is required to be performed arrive at the PDCP layer, a method of operating a discard timer by a PDCP entity in the units of PDUs may be also considered. In this case, at the time point at which each of the PDUs (i.e., PDCP SDUs) configuring a particular PDU set arrives at the PDCP layer, the PDCP entity may start a discard timer associated with the corresponding PDU. Thereafter, when a discard timer corresponding to a random PDU (i.e., PDCP SDU) included in the particular PDU set expires, the PDCP entity may abandon the PDUs (i.e., PDCP SDUs) configuring the PDU set all together. A more detailed operation will be described with reference to FIG. 4B described later.

Referring to FIG. 4A, in a case where a timer parameter (e.g., discardTimer) related to a discarding operation of a random PDU (or PDCP SDU) is configured for a PDCP entity of a traffic flow associated with PDU set X and a particular DRB mapped to the traffic flow, when the PDCP entity for which the discardTimer is configured receives each of the PDCP SDUs corresponding to the PDUs of PDU set X from an upper layer, the PDCP entity may start the discardTimer of each PDCP SDU configured for the DRB, with respect to the corresponding PDCP SDU. If the discardTimer expires before the transmission of a PDCP SDU is successful, the PDCP entity may give up the transmission and abandon the PDCP SDU. In addition, when a PDCP SDU has already been transferred to a lower layer for transmission, the PDCP entity may indicate the lower layer to abandon a PDCP PDU corresponding to the PDCP SDU. The above PDCP SDU discarding operation on the PDCP layer may be configured in a case where, when traffic sensitive to delay time is transmitted, a PDCP SDU, even if transmitted belatedly after the expiration of discardTimer configured to have a particular time value, is meaningless at the reception node. For example, PDUs 402, 404, and 406 configuring PDU Set_1 400 may correspond to PDCP SDUs 412, 414, and 416, respectively, and a discardTimer 410 may be configured for a PDCP entity of a DRB associated with PDU Set_1 400. The PDCP entity may start the discardTimer 410 when each of the PDCP SDUs 412, 414, and 416 is received by the PDCP entity from an upper layer. If the discardTimer 410 expires before the transmission of each of the PDCP SDUs 412, 414, and 416 is successful, the PDCP entity may give up the transmission of the PDCP SDU and abandon the PDCP SDU. In addition, the PDCP entity may discard the PDCP SDU if it is determined that the PDCP SDU has been successfully transmitted to the reception node.

An operation of the PDCP entity of a UE and/or a base station according to FIG. 4A may be described as shown in Table 1 below.

**[Table 1]**

| |
|---|
| When the *discardTimer* expires for a PDCP SDU, or the successful delivery of a PDCP SDU is confirmed by PDCP status report, the transmitting PDCP entity shall discard the PDCP SDU along with the corresponding PDCP Data PDU. If the corresponding PDCP Data PDU has already been submitted to lower layers, the discard is indicated to lower layers. |
| For SRBs, when upper layers request a PDCP SDU discard, the PDCP entity shall discard all stored PDCP SDUs and PDCP PDUs. |
| NOTE: Discarding a PDCP SDU already associated with a PDCP SN causes a SN gap in the transmitted PDCP Data PDUs, which increases PDCP reordering delay in the receiving PDCP entity. It is up to UE implementation how to minimize SN gap after SDU discard. |

Referring to FIG. 4B, in a case where a timer parameter (e.g., discardTimer4PDUSet) related to a discarding operation of a random PDU set is configured for a PDCP entity of a traffic flow associated with PDU set X and a particular DRB mapped to the traffic flow, when the PDCP entity for which the discardTimer4PDUSet is configured receives each of the PDCP SDUs corresponding to the PDUs of PDU set X from an upper layer, the PDCP entity may start the discardTimer4PDUSet of each PDCP SDU configured for the DRB, with respect to the corresponding PDCP SDU. If the discardTimer4PDUSet expires before the transmission of a PDCP SDU is successful, the PDCP entity may give up the transmission and abandon the PDCP SDU. In addition, when a PDCP SDU has already been transferred to a lower layer for transmission, the PDCP entity may indicate the lower layer to abandon a PDCP PDU corresponding to the PDCP SDU. The above PDCP SDU discarding operation on the PDCP layer may be configured in a case where, when traffic sensitive to delay time is transmitted, a PDCP SDU, even if transmitted belatedly after the expiration of discardTimer4PDUSet configured to have a particular time value, is meaningless at the reception node. When a PDCP entity performs a PDCP discarding procedure in a case where the traffic of a service required to be processed in units of PDU sets and the traffic of a service required to be processed in units of PDUs coexist in the same DRB, a base station may configure discardTimer4PDUSet to be applied to a PDCP SDU corresponding to a PDU set and discardTimer to be applied to a PDCP SDU not corresponding to a PDU set so as to apply separate discard timers to the PDCP SDU corresponding to a PDU set and the PDCP SDU not corresponding to a PDU set. In addition, discardTimer4PDUSet configured for a PDCP SDU corresponding to a PDU set may be configured so that, if a PDCP SDU belonging to the PDU set fails to be transmitted and is discarded before the expiration of the discardTimer4PDUSet, the PDCP entity determines that the remaining PDCP SDUs of the same PDU set stored in the PDCP entity are also meaningless at the reception node, and discards the remaining PDCP SDUs. For example, PDUs 432, 434, and 436 configuring PDU Set_1 430 may correspond to PDCP SDUs 442, 444, and 446, respectively, and a discardTimer4PDUSet 440 may be configured for a PDCP entity of a DRB associated with PDU Set_1 430. The PDCP entity may start the discardTimer4PDUSet 440 when each of the PDCP SDUs 442, 444, and 446 is received by the PDCP entity from an upper layer. If the discardTimer4PDUSet 440 expires before the transmission of each of the PDCP SDUs 442, 444, and 446 is successful, the PDCP entity may give up the transmission of the PDCP SDU and abandon the PDCP SDU. In addition, the PDCP entity may discard the PDCP SDU if it is determined that the PDCP SDU has been successfully transmitted to the reception node. If the discardTimer4PDUSet 440 expires before the transmission of PDCP SDU2 444 is successful and it is determined that PDCP SDU3 446 is stored in the PDCP entity, the PDCP entity may discard PDCP SDU2 444 and PDCP SDU3 446. If there is a PDCP SDU which belongs to the same PDU set as the discarded PDCP SDUs and has already been transferred to a lower layer, the PDCP entity may indicate the lower layer to abandon a PDCP PDU corresponding to the PDCP SDU.

An operation of the PDCP entity of a UE and/or a base station according to FIG. 4B may be described as shown in Table 2 below.

**[Table 2]**

| |
|---|
| When the *discardTimer4PDUset* expires for a PDCP SDU of a PDUSet, or the successful delivery of all PDCP SDUs of a PDUSet is confirmed by PDCP status report, the transmitting PDCP entity shall discard all the PDCP SDUs along with the corresponding PDCP Data PDU of a PDUSet. If the corresponding PDCP Data PDU has already been submitted to lower layers, the discard is indicated to lower layers. |
| NOTE: Discarding a PDCP SDU already associated with a PDCP SN causes a SN gap in the transmitted PDCP Data PDUs, which increases PDCP reordering delay in the receiving PDCP entity. It is up to UE implementation how to minimize SN gap after SDU discard. |

Referring to FIG. 4C, in a case where discardTimer4PDUSet is configured for a PDCP entity of a traffic flow associated with PDU set X and a particular DRB mapped to the traffic flow, when the PDCP entity for which the discardTimer4PDUSet is configured receives each of a PDCP SDU corresponding to a PDU of PDU set X from an upper layer, the PDCP entity may start the discardTimer4PDUSet configured for the DRB of the PDCP SDU. For example, the PDCP entity may operate the discardTimer4PDUSet in units of PDU sets in order to perform a discarding operation in units of PDU sets. The discardTimer4PDUSet may be started when the PDCP entity initially receives a PDCP SDU corresponding to a PDU of PDU set X. The firstly received PDCP SDU may be a PDCP SDU corresponding to the first PDU of PDU set X received in the PDCP entity or a PDCU SDU corresponding to a PDU having the lowest sequence number received in the PDCP entity. If the discardTimer4PDUSet expires before the transmission of the PDCP SDUs of PDU set X is successful, the PDCP entity may give up the transmission and abandon the remaining PDCP SDUs of the PDU set remaining in the PDCP entity. In addition, when a PDCP SDU of the PDU set has already been transferred to a lower layer for transmission, the PDCP entity may indicate the lower layer to abandon a PDCP PDU corresponding to the PDCP SDU. The above PDCP SDU discarding operation on the PDCP layer may be configured in a case where, when traffic sensitive to delay time is transmitted, a PDCP SDU, even if transmitted belatedly after the expiration of discardTimer4PDUSet configured to have a particular time value, is meaningless at the reception node. When a PDCP entity performs a PDCP discarding procedure in a case where the traffic of a service required to be processed in units of PDU sets and the traffic of a service required to be processed in units of PDUs coexist in the same DRB, a base station may configure discardTimer4PDUSet to be applied to a PDCP SDU corresponding to a PDU set and discardTimer to be applied to a PDCP SDU not corresponding to a PDU set so as to apply separate discard timers to the PDCP SDU corresponding to a PDU set and the PDCP SDU not corresponding to a PDU set. In addition, discardTimer4PDUSet configured for a PDCP SDU corresponding to a PDU set may be configured so that, if a PDCP SDU belonging to the PDU set fails to be transmitted and is discarded before the expiration of the discardTimer4PDUSet, the PDCP entity determines that the remaining PDCP SDUs of the same PDU set stored in the PDCP entity are also meaningless at the reception node, and discards the remaining PDCP SDUs. For example, PDUs 462, 464, and 466 configuring PDU Set_1 460 may correspond to PDCP SDUs 472, 474, and 476, respectively, and a discardTimer4PDUSet 470 may be configured for a PDCP entity of a DRB associated with PDU Set_1 460. The PDCP entity may start the discardTimer4PDUSet 470 when the first PDCP SDU 472 belonging to PDU Set_1 460 is received by the PDCP entity from an upper layer. If the discardTimer4PDUSet 470 expires before the transmission of all the PDCP SDUs 472, 474, and 476 belonging to PDU Set_1 460 is successful, the PDCP entity may give up the transmission of the PDCP SDUs belonging to PDU Set_1 460 and abandon the PDCP SDUs in the PDCP entity. In addition, if it is determined that all the PDCP SDUs belonging to PDU Set_1 460 have been successfully transmitted to the reception node, the PDCP entity may discard the PDCP SDUs. If the discardTimer4PDUSet 470 expires before the transmission of PDCP SDU2 474 is successful and it is determined that PDCP SDU3 476 is stored in the PDCP entity, the PDCP entity may discard PDCP SDU2 474 and PDCP SDU3 476. If there is a PDCP SDU which belongs to the same PDU set as the discarded PDCP SDUs and has already been transferred to a lower layer, the PDCP entity may indicate the lower layer to abandon a PDCP PDU corresponding to the PDCP SDU.

An operation of the PDCP entity of a UE and/or a base station according to FIG. 4C may be described as shown in Table 3 below.

**[Table 3]**

| |
|---|
| When the *discardTimer4PDUset* expires for a PDUSet, or the successful delivery of all PDCP SDUs of a PDUSet is confirmed by PDCP status report, the transmitting PDCP entity shall discard all the PDCP SDUs along with the corresponding PDCP Data PDU of a PDUSet. If the corresponding PDCP Data PDU has already been submitted to lower layers, the discard is indicated to lower layers. |
| NOTE: Discarding a PDCP SDU already associated with a PDCP SN causes a SN gap in the transmitted PDCP Data PDUs, which increases PDCP reordering delay in the receiving PDCP entity. It is up to UE implementation how to minimize SN gap after SDU discard. |

As an embodiment of a PDU set-specific QoS requirement/parameter, a PDU set integrated handling indicator (integrated handling indication or integrated handling) may be used as information indicating that traffic is meaningful at the application layer of the reception node only if the traffic includes all the PDUs belonging to a PDU set. For example, the PDU set integrated handling indicator may be used as a parameter indicating that, if at least one PDU belonging to a corresponding PDU set is not successfully transmitted, the remaining PDUs are meaningless. The PDU set integrated handling indicator may be one of parameters indicated by a 5G QoS indicator (5QI) configured for PDU set usage. If a PDU set integrated handling parameter is included in a 5QI, this may indicate that integrated handling is required for a corresponding PDU set. Alternatively, if a PDU set integrated handling parameter is included in a 5QI and is configured to be ON (or "1"), this may indicate that integrated handling is required for a corresponding PDU set, and if the parameter is configured to be OFF (or "0"), this may indicate that integrated handling is not required for a corresponding PDU set. The PDU set integrated handling parameter may be applied to a DRB corresponding to downlink traffic or a DRB corresponding to uplink traffic, and may be used as a criterion of applying PDU set discarding. For example, if PDU set integrated handling is configured in 5QI information of a QoS flow corresponding to downlink/uplink traffic (or a PDU set integrated handling parameter is included in a 5QI and/or is configured to be ON (or "1")), a base station may configure PDCP config to apply PDU set discarding for a DL DRB/UL DRB corresponding to the QoS flow. For example, if PDU set integrated handling is configured in 5QI information of a QoS flow corresponding to downlink/uplink traffic (a PDU set integrated handling parameter is included in a 5QI and/or is configured to be ON (or "1")), when a network congestion situation is determined, a base station may configure PDCP config to apply PDU set discarding for a DL DRB/UL DRB corresponding to the QoS flow. In the above description, the case of applying PDU set discarding for a DL DRB/UL DRB by the base station when PDU set integrated handling is configured is given as an example. However, even when PDU set integrated handling is not configured (a PDU set integrated handling parameter is not included in a 5QI and/or is configured to be OFF (or "0")), the base station may apply PDU set discarding for a DL DRB/UL DRB. Therefore, the PDU set integrated handling parameter may be used for the base station to configure PDU set discarding for a DL DRB/UL DRB corresponding to a PDU set. The PDU set integrated handling parameter may be used, together with a network congestion situation condition, for the base station to configure PDU set discarding for a DL DRB/UL DRB corresponding to a PDU set.

As an embodiment of a PDU set-specific QoS requirement/parameter, PDU set importance may be used to indicate the relative importance between PDU sets. For example, PDU set importance may indicate the importance of each PDU set belonging to the same QoS flow. The same PDU set importance value may be applied to all PDUs belonging to a corresponding PDU set. There may be one or multiple PDU sets of one DRB corresponding to the same QoS flow, and the importances of PDU sets belonging to the same DRB may be the same or different. PDU set importance may be used to determine a PDU set, the priority of which is to be increased for processing, or a PDU set to which PDU set discarding is to be applied, based on PDU set importance when it is unable to identically process all PDU sets in a network congestion situation. A PDU set importance parameter may be configured as high importance/low importance, as importance presence/importance absence, or as an integer value (e.g., represented as 1 to 8 and interpreted such that the smallest number represents the lowest priority or the highest priority). The PDU set importance parameter may be included in a GTP-U header to indicate the importance of a correspond PDU set in a case of downlink traffic. The PDU set importance parameter may be included in a header (e.g., RTP header/extension header) in a packet transferred from the application layer of a UE to the SDAP layer to indicate the importance of a correspond PDU set in a case of uplink traffic. For example, a base station may configure that, for a DRB corresponding to downlink traffic, PDU set discarding is not applied to a PDU set configured to have high PDU set importance, and PDU set discarding is applied to a PDU set configured to have low PDU set importance. For example, a base station may configure that, for a DRB corresponding to uplink traffic, PDU set discarding is not applied to a PDU set configured to have high PDU set importance, and PDU set discarding is applied to a PDU set configured to have low PDU set importance. In the above description, the case of applying PDU set discarding for a DL DRB/UL DRB by the base station when PDU set importance is configured to be low is given as an example. However, even when PDU set importance is configured to be high, the base station may apply PDU set discarding for a DL DRB/UL DRB. Therefore, the PDU set importance parameter may be used for the base station to configure PDU set discarding for a DL DRB/UL DRB corresponding to a PDU set. The PDU set importance parameter may be used, together with a network congestion situation condition, for the base station to configure PDU set discarding for a DL DRB/UL DRB corresponding to a PDU set. If the PDU set importance parameter is represented as an integer value, the base station may configure importance _threshold as a reference value for configuring PDU set discarding. In a case of downlink traffic, the base station may determine PDU set importance and determine PDU set discarding for a DL DRB by using information (e.g., GTP-U header) of a packet. In a case of uplink traffic, the UE rather than the base station may determine the importance of a uplink PDU set, and thus the base station may configure importance_threshold used to apply PDU set discarding for a UL DRB, or include, in PDCP config, information indicating whether to use PDU set importance to apply PDU set discarding.

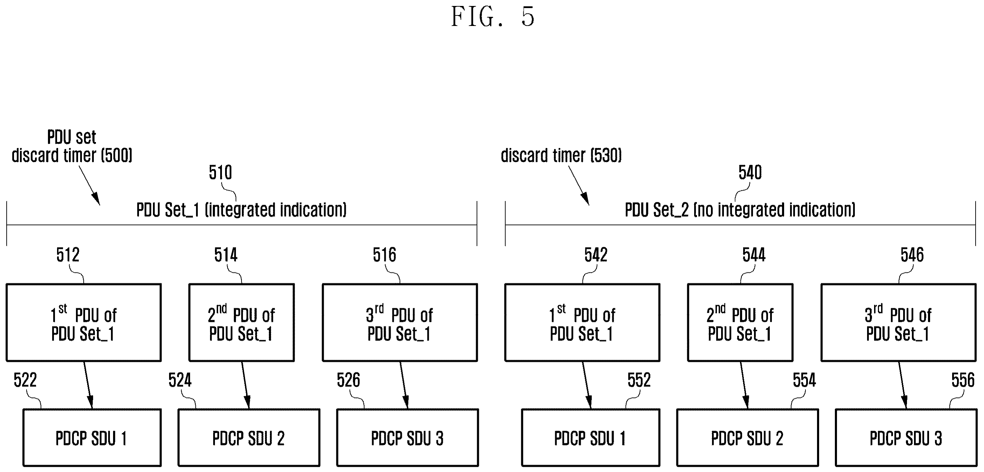

FIG. 5 illustrates a PDU set discarding operation or a PDU discarding operation on a PDCP layer according to a PDU set integrated handling configuration in an embodiment of the disclosure.

Referring to FIG. 5, a base station may configure PDU set discarding, based on configuration information of a PDU set integrated handling parameter corresponding to a PDU set. The configuration information of the PDU set integrated handling parameter may include the case where the PDU set integrated handling parameter is included as a 5QI parameter corresponding to the PDU set, or the case where the PDU set integrated handling parameter is configured to be ON (or true or 1). For example, the base station may configure PDU set discarding to be performed for a DRB corresponding to a PDU set for which a PDU set integrated handling parameter is configured. For example, the base station may configure PDU set discarding to be performed for a DRB corresponding to a PDU set for which a PDU set integrated handling parameter is not configured. The base station may configure conventional PDU-based discarding to be performed for a DRB for which PDU set discarding is configured not to be performed. The conventional PDU-based discarding has been described with reference to FIG. 4A. The base station may configure discardTimer4PDUSet for a DRB for which PDU set discarding is configured. The base station may configure discardTimer for a DRB for which conventional PDU-based discarding is configured.

PDU Set_1 510 is a PDU set for which a PDU set integrated handling parameter is configured, and PDU Set_1 510 may be configured by PDUs 512, 514, and 516. The PDUs 512, 514, and 516 of PDU Set_1 510 may be mapped to PDCP SDU 522, 524, and 526. The base station may configure PDU set discarding to be performed for PDU Set_1 510 for which the PDU set integrated handling parameter is configured, and PDCP config information of a DRB corresponding to PDU Set_1 510 may include a discardTimer4PDUSet 500. PDU Set_2 540 is a PDU set for which a PDU set integrated handling parameter is not configured, and PDU Set_2 540 may be configured by PDUs 542, 544, and 546. The PDUs 542, 544, and 546 of PDU Set_2 540 may be mapped to PDCP SDU 552, 554, and 556. The base station may configure that conventional PDU-based discarding is performed, instead of PDU set discarding being performed, for PDU Set_2 540 for which the PDU set integrated handling parameter is not configured, and PDCP config information of a DRB corresponding to PDU Set_2 540 may include a discardTimer 530.

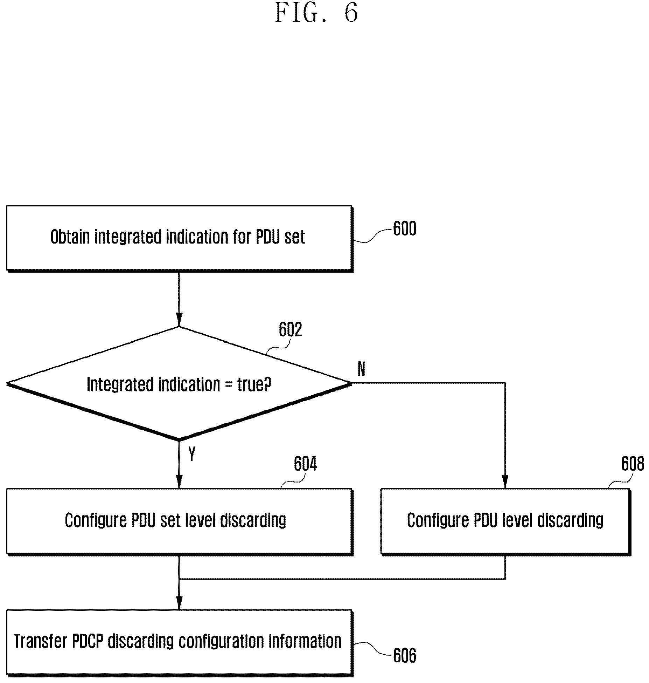

FIG. 6 illustrates an operation of a base station configuring a PDU set discarding operation or a PDU discarding operation for a PDCP layer, based on a PDU set integrated handling configuration according to an embodiment of the disclosure.

Referring to FIG. 6, a base station may determine PDU set integrated handling configuration information or a PDU set integrated handling configuration indicator for a PDU set in operation 600. The PDU set integrated handling configuration information for the PDU set may be obtained from 5QI information of the PDU set or obtained from QoS flow configuration information transferred from a core network to the base station. The base station may determine whether PDU set integrated handling is configured for the PDU set in operation 602, and when it is determined that PDU set integrated handling is configured for the PDU set, configure applying of PDU set discarding for the PDU set in operation 604. The base station may configure PDCP configuration information to be used to apply PDU set discarding and transfer the PDCP configuration information to a UE in operation 606. In operation 606, the PDCP configuration information may include at least one or a combination of a DRB corresponding to the PDU set, information indicating application of PDU set discarding for the DRB, and discardTimer4PDUSet. The base station may determine that PDU set integrated handling is not configured for the PDU set according to the determination in operation 602, and may configure applying of conventional PDU discarding for the PDU set in operation 608. The base station may proceed to operation 606, configure PDCP configuration information to be used for the PDU set, and transfer same to the UE. The PDCP configuration information may include at least one or a combination of a DRB corresponding to the PDU set, and discardTimer required for applying conventional PDU discarding for the DRB. FIG. 6 is an example of the case of determining to apply PDU set discarding when integrated handling is configured for a PDU set, and it is obvious that a base station may determine to apply PDU set discarding even when integrated handling is not configured for a PDU set.

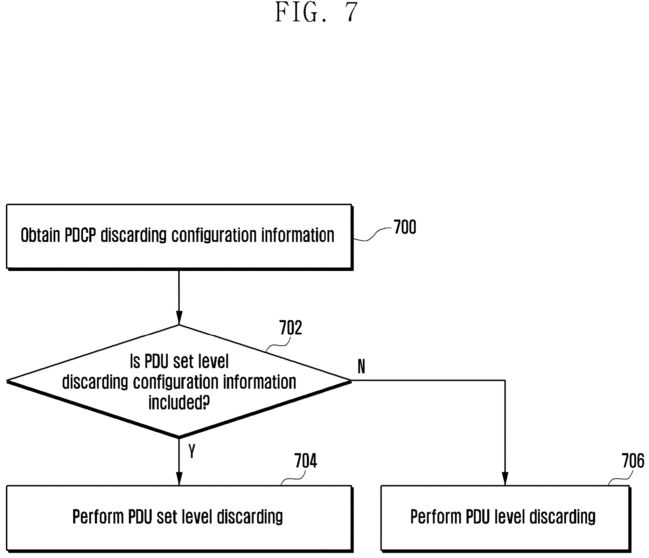

FIG. 7 illustrates an operation of a UE determining whether to perform a PDU set discarding operation or a PDU discarding operation on a PDCP layer, based on a PDU set integrated handling configuration according to an embodiment of the disclosure.

Referring to FIG. 7, a UE may obtain PDCP configuration information from a base station in operation 700. In operation 700, the PDCP configuration information may include at least one or a combination of a DRB corresponding to a PDU set, information indicating application of PDU set discarding, discardTimer4PDUSet, and discardTimer. The UE may determine whether a PDU set discarding configuration is included in the PDCP configuration information of operation 700 in operation 702. The PDU set discarding configuration may include, for example, information indicating application of PDU set discarding, discardTimer4PDUSet information, or the like. If the UE determines that a PDU set discarding configuration is included, the UE may apply PDU set discarding for a PDU set associated with a corresponding DRB in operation 704. An example of the UE operation of operation 704 may correspond to FIG. 4B or FIG. 4C. If it is determined that a PDU set discarding configuration is not included, the UE may apply conventional PDU discarding for a PDU set associated with a corresponding DRB in operation 706. An example of the UE operation of operation 706 may correspond to FIG. 4A.

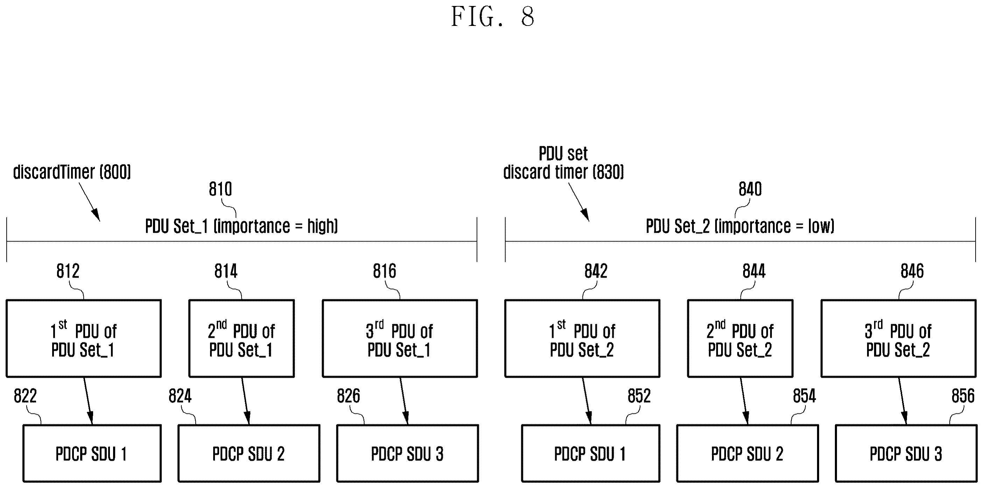

FIG. 8 illustrates a PDU set discarding operation on a PDCP layer, based on a PDU set importance configuration according to an embodiment of the disclosure.

Referring to FIG. 8, a base station may configure whether to perform a PDU set discarding operation or a PDU discarding operation, based on PDU set importance configuration information corresponding to a PDU set. The PDU set importance configuration information is a parameter which may be indicated in a header (e.g., GTP-U header or RTP header/extension header) of the PDU set, and may be represented as high/low importance, as importance presence/absence, or as an integer value (e.g., 1 to 8). If importance is represented as an integer value, a reference value (importance_threshold) for determining that the importance of a PDU set is high may be configured. For example, the base station may configure a UE not to perform PDU set discarding for a DRB corresponding to a PDU set having high PDU set importance. For example, the base station may configure the UE to perform PDU set discarding for a DRB corresponding to a PDU set having low PDU set importance. The base station may configure conventional PDU-based discarding to be performed for a PDU set corresponding to a DRB for which PDU set discarding is configured not to be performed. The conventional PDU-based discarding is performed as in the embodiment of FIG. 4A. The base station may configure discardTimer4PDUSet for a DRB for which PDU set discarding is configured. The base station may configure discardTimer for a DRB for which conventional PDU-based discarding is configured. The base station may configure a reference value (importance_threshold) for determining the importance of a PDU set.

The embodiment of FIG. 8 corresponds to a case of configuring a PDU set discarding operation to be performed for a DRB corresponding to a PDU set having low PDU set importance and configuring a conventional PDU discarding operation to be performed for a DRB corresponding to a PDU set having high PDU set importance. For example, when it is required to differentiate and use wireless resources, based on the importance of PDU sets due to network congestion, a PDU set discarding operation may be used as a method for maximally securing the transmission of the PDUs included in a PDU set having high importance rather than the PDUs included in a PDU set having low importance.

PDU Set_1 810 is a PDU set configured to have high PDU set importance (or determined based on importance_threshold), and PDU Set_1 810 may be configured by PDUs 812, 814, and 816. The PDUs 812, 814, and 816 of PDU Set_1 810 may be mapped to PDCP SDU 822, 824, and 826. The base station may configure conventional PDU-based discarding to be performed for PDU Set_1 810 configured (or determined) to have high PDU set importance, and PDCP config information of a DRB corresponding to PDU Set_1 810 may include a discardTimer 800. PDU Set_2 840 is a PDU set configured to have low PDU set importance (or determined based on importance_threshold), and PDU Set_2 840 may be configured by PDUs 842, 844, and 846. The PDUs 842, 844, and 846 of PDU Set_2 840 may be mapped to PDCP SDU 852, 854, and 856. The base station may configure PDU set discarding to be performed for PDU Set_2 840 configured (or determined) to have low PDU set importance, and PDCP config information of a DRB corresponding to PDU Set_2 840 may include a discardTimer4PDUSet 830.

Although not illustrated in FIG. 8, as another embodiment in which the base station configures a PDCP discarding option (conventional PDU discarding or PDU set discarding), based on the importance of a PDU set, the base station may configure conventional PDU-based discarding to be performed for a PDU set having low PDU set importance and configure PDU set discarding to be performed for a PDU set having high PDU set importance. For example, in a case of a PDU set having high importance, if all the PDUs or a predetermined number of PDUs or more included in the PDU set are not properly transmitted, it is meaningless that the reception node processes the PDU set. Therefore, a PDU set discarding operation may be used as a method of giving up the transmission of the remaining PDUs by the transmission node.

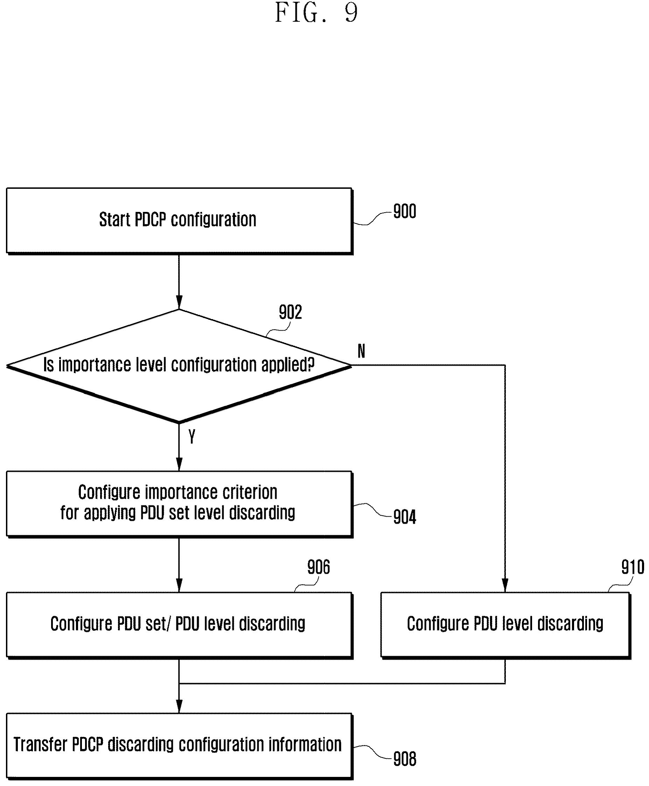

FIG. 9 illustrates an operation of a base station configuring a PDU set discarding operation or a PDU discarding operation for a PDCP layer, based on a PDU set importance configuration according to an embodiment of the disclosure.

Referring to FIG. 9, a base station may determine to configure PDCP configuration information for a DRB corresponding to a PDU set in operation 900. The base station may determine whether to configure PDCP configuration information, based on a PDU set importance configuration of the PDU set in operation 902. According to the determination in operation 902, when the base station is to configure PDCP configuration information, based on a PDU set importance configuration, the base station may configure a PDU set importance criterion for applying a PDU set discarding method in operation 904. In operation 904, the base station may, when determining PDU set discarding or conventional PDU discarding, based on PDU set importance, configure applying of PDU set discarding for a PDU set having low importance or applying of PDU set discarding for a PDU set having high importance as an embodiment for a PDU set importance criterion for applying PDU set discarding. A configuration of the PDU set importance criterion may be determined based on the implementation of the base station or a network policy configured in the base station. The base station may configure PDCP configuration information of the case of applying PDU set discarding and configure PDCP configuration information of the case of applying conventional PDU discarding in operation 906, and transfer the PDCP configuration information to a UE in operation 908. The PDCP configuration information in operation 908 may include at least one or a combination of a DRB corresponding to the PDU set, a PDU set importance reference value (importance_threshold, a criterion for determining importance when PDU set importance is represented as an integer value (e.g., 1 to 8)), an importance criterion for applying PDU set discarding (a configuration mapped to high/low or presence/absence), discardTimer4PDUSet to be applied in PDU set discarding, an importance criterion for applying conventional PDU discarding (a configuration mapped to high/low or presence/absence), and discardTimer to be applied in conventional PDU discarding. For example, when it is determined to use PDU set importance to apply PDU set discarding, the mapping relation between a PDU set importance value and discardTimer4PDUset to be used in PDU set discarding and/or the mapping relation between a PDU set importance value and discardTimer to be used in conventional PDU discarding may be transferred as PDCP configuration information. PDCP configuration information may include a DRB list, and if PDU set importance is determined for each DRB in advance, there is no need to map a PDU set importance value and a discard timer parameter, and PDCP configuration information including discardTimer4PDUset to be used in PDU set discarding or discardTimer to be used in conventional PDU discarding may be transferred to the UE.

The base station may determine not to apply PDU set discarding, based on PDU set importance according to the determination in operation 902, determine to apply conventional PDU discarding for the PDU set in operation 910, and configure PDCP configuration information. The base station may proceed to operation 908, configure PDCP configuration information, and transfer same to the UE. The PDCP configuration information may include at least one or a combination of a DRB corresponding to the PDU set, and discardTimer required for applying conventional PDU discarding for the DRB.

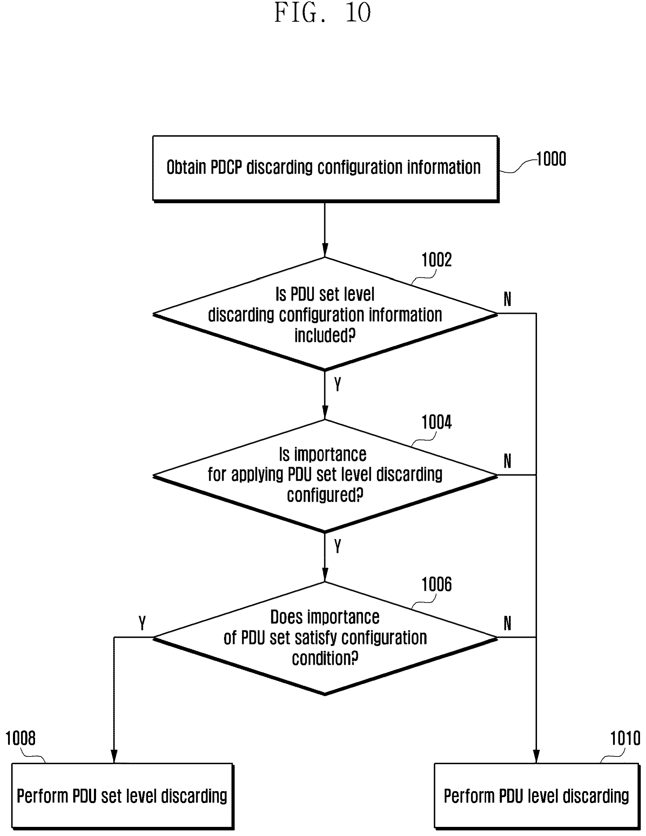

FIG. 10 illustrates an operation of a UE determining whether to perform a PDU set discarding operation or a PDU discarding operation on a PDCP layer, based on a PDU set importance configuration according to an embodiment of the disclosure.

Referring to FIG. 10, a UE may obtain PDCP configuration information from a base station in operation 1000. The PDCP configuration information in operation 1000 may include at least one or a combination of a DRB corresponding to a PDU set, information indicating application of PDU set discarding, discardTimer4PDUSet, discardTimer, an importance criterion for applying PDU set discarding, an importance criterion for applying conventional PDU discarding, and a PDU set importance reference value (importance_threshold). The UE may determine whether a PDU set discarding configuration is included in the PDCP configuration information of operation 1000 in operation 1002. The PDU set discarding configuration may include, for example, information indicating application of PDU set discarding, discardTimer4PDUSet information, an importance criterion for applying PDU set discarding, a PDU set importance reference value (importance_threshold), and an importance criterion for applying conventional PDU discarding. If it is determined that a PDU set discarding configuration is included, the UE may determine whether a PDU set importance configuration for applying PDU set discarding is included in operation 1004. PDU set importance configuration information may include, for example, an importance criterion for applying PDU set discarding, a PDU set importance reference value (importance_threshold), and an importance criterion for applying conventional PDU discarding. The UE may determine whether a PDU set associated with a corresponding DRB satisfies an importance criterion for applying PDU set discarding in operation 1006. As an embodiment, importance information of the PDU set may be indicated in a header (e.g., RTP header/extension header) of the PDU set transferred from the application layer to the SDAP layer. As an embodiment, if the importance criterion for applying PDU set discarding for the PDU set is configured to be "high importance" in the PDCP configuration information, the UE may determine whether PDU set importance corresponding to the PDU set associated with the corresponding DRB is "high importance." As an embodiment, if the importance criterion for applying PDU set discarding for the PDU set is configured to be "importance>3" in the PDCP configuration information, the UE may determine that the PDU set importance of a PDU set configured to have an integer value greater than 3 as a PDU set importance value is "high importance." As an embodiment, if the PDU set importance reference value (importance_threshold) for applying PDU set discarding is configured to be 3 in the PDCP configuration information, the UE may determine that a PDU set configured to have an integer value greater than 3 (or equal to or greater than 3) as a PDU set importance value satisfies a condition for applying PDU set discarding. The UE may apply PDU set discarding for the PDU set of the DRB satisfying the importance criterion for applying PDU discarding according to the determination in operation 1006, in operation 1008. An example of the UE operation of operation 1008 may correspond to FIG. 4B or FIG. 4C. The UE may apply conventional PDU discarding for the PDU set of the DRB not satisfying the importance criterion for applying PDU set discarding according to the determination in operation 1006, in operation 1010. An example of the UE operation of operation 1010 may correspond to FIG. 4A. If it is determined that a PDU set importance configuration for applying PDU set discarding is not included according to the determination in operation 1004, the UE may apply conventional PDU discarding for a PDU set associated with the DRB in operation 1010. If it is determined that a configuration for applying PDU set discarding is not included according to the determination in operation 1002, the UE may apply conventional PDU discarding for a PDU set associated with the DRB in operation 1010.

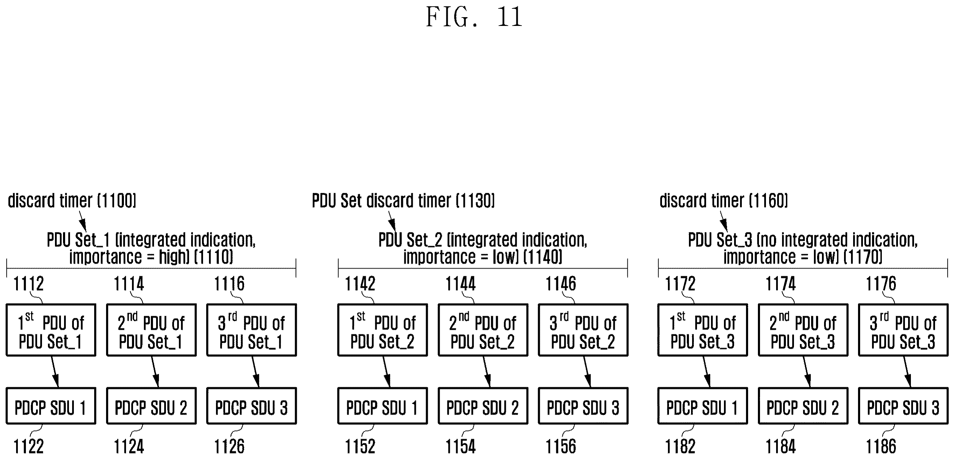

FIG. 11 illustrates a PDU set discarding operation or a PDU discarding operation on a PDCP layer according to a PDU set integrated handling configuration and a PDU set importance configuration in an embodiment of the disclosure.

A base station may consider both or only one of a PDU set integrated handling parameter and a PDU set importance parameter as a determination criterion for configuring PDU set discarding or conventional PDU discarding to be applied for a PDU set.

Referring to FIG. 11, the base station may consider both the PDU set integrated handling parameter and the PDU set importance parameter when PDU set discarding is configured for a PDU set. The PDU set integrated handling parameter may be operated as in the embodiment of FIG. 5, and the PDU set importance parameter may be operated as in the embodiment of FIG. 8. FIG. 11 illustrates an example of a case of configuring applying of PDU set discarding for a PDU set for which a PDU set integrated handling parameter is configured and which is configured (or determined) to have low PDU set importance, and configuring applying of conventional PDU discarding for a PDU set for which a PDU set integrated handling parameter is configured and which is configured (or determined) to have high PDU set importance. In the embodiment of FIG. 11, if a PDU set integrated handling parameter is not included (or PDU set integrated handling is not applied), it is configured to apply conventional PDU discarding regardless of the importance of a PDU set. For example, when wireless resources are insufficient due to network congestion, if all the PDUs or a predetermined number of PDUs or more belonging to a PDU set for which PDU set integrated handling is configured are not properly transmitted, the transmission node may determine that the PDU set is a PDU set which is meaningless to process at the reception node, and operate a PDCP discarding method to maximally ensure the transmission of the PDUs included in a PDU set having high PDU set importance rather than the PDUs included in a PDU set having low PDU set importance.

As another embodiment in which the base station configures a PDCP discarding option by considering both a PDU set integrated handling parameter and a PDU set importance parameter, the base station may configure applying of PDU set discarding for a PDU set associated with a DRB regardless of the PDU set importance thereof when PDU set integrated handling is configured for the PDU set, configure applying of PDU set discarding for a PDU set associated with a DRB, for which PDU set integrated handling is not configured, and which has low PDU importance, and configure applying of conventional PDU discarding for a PDU set associated with a DRB, for which PDU set integrated handling is not configured, and which has high PDU importance. For example, when wireless resources are insufficient due to network congestion, if all the PDUs or a predetermined number of PDUs or more in a PDU set to which PDU set integrated handling is applied are not properly transmitted, it is meaningless that the reception node processes the PDU set. Therefore, the base station may configure applying of PDU set discarding for the PDU set. In addition, in a case of a PDU set for which PDU set integrated handling is not configured, the base station may consider the PDU set importance of the PDU set to determine whether to configure applying of PDU set discarding or conventional PDU discarding. A criterion for configuring a PDCP discarding option (PDU set discarding or conventional PDU discarding) by considering both the PDU set integrated handling parameter and the PDU set importance parameter may be determined based on the implementation of the base station or a policy configured in the base station.

In the example of FIG. 11, PDU Set_1 1110 is a PDU set for which a PDU set integrated handling parameter is configured, and is configured (or determined) to have high PDU set importance, and PDU Set_1 1110 may be configured by PDUs 1112, 1114, and 1116. The PDUs 1112, 1114, and 1116 of PDU Set_1 1110 may be mapped to PDCP SDU 1122, 1124, and 1126. The base station may configure conventional PDU discarding to be performed for PDU Set_1 1110, for which a PDU set integrated handling parameter is configured, and which is configured (or determined) to have high PDU set priority, and PDCP config information of a DRB corresponding to PDU Set_1 1110 may include a discardTimer 1100. PDU Set_2 1140 is a PDU set for which a PDU set integrated handling parameter is configured, and is configured (or determined) to have low PDU set importance, and PDU Set_2 1140 may be configured by PDUs 1142, 1144, and 1146. The PDUs 1142, 1144, and 1146 of PDU Set_2 1140 may be mapped to PDCP SDU 1152, 1154, and 1156. The base station may configure PDU set discarding to be performed for PDU Set_2 1140, for which a PDU set integrated handling parameter is configured, and which is configured (or determined) to have low PDU set importance, and PDCP config information of a DRB corresponding to PDU Set_2 1140 may include a discardTimer4PDUSet 1130. PDU Set_3 1170 is a PDU set for which a PDU set integrated handling parameter is not configured, and is configured (or determined) to have low PDU set importance, and PDU Set_3 1170 may be configured by PDUs 1172, 1174, and 1176. The PDUs 1172, 1174, and 1176 of PDU Set_3 1170 may be mapped to PDCP SDUs 1172, 1174, and 1176. The base station may configure conventional PDU discarding to be performed for PDU Set_3 1170, for which a PDU set integrated handling parameter is not configured, and which is configured (or determined) to have low PDU set priority, and PDCP config information of a DRB corresponding to PDU Set_3 1170 may include a discardTimer 1600.

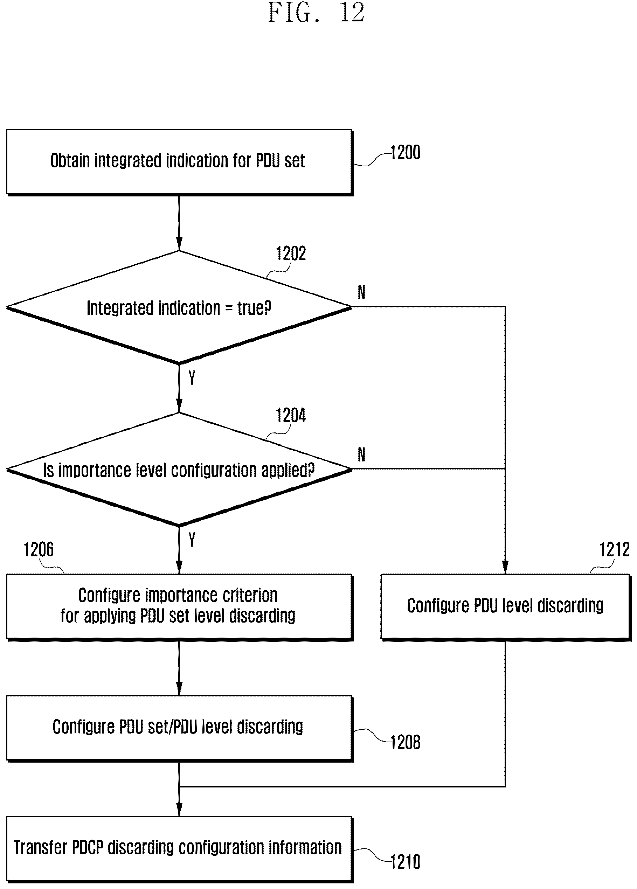

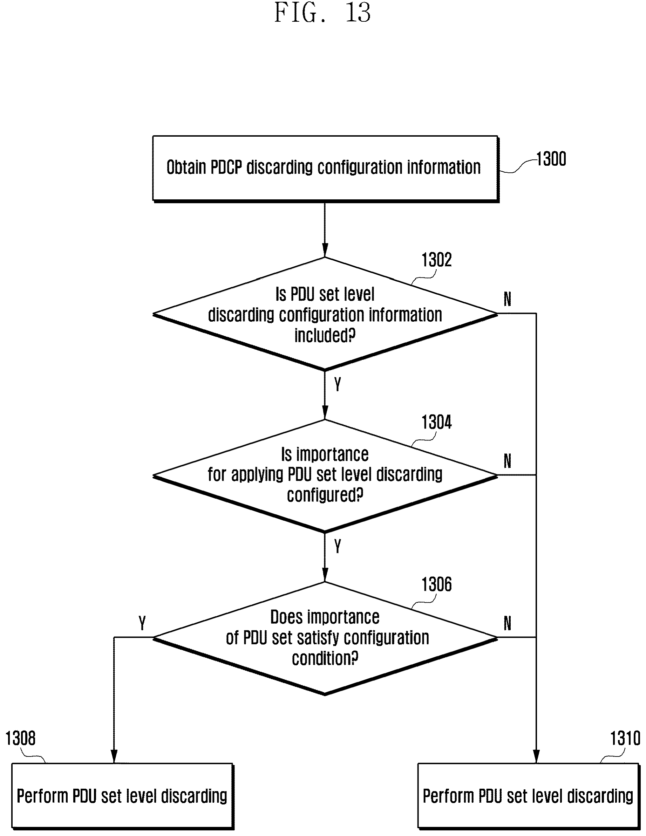

The embodiment of FIG. 11 assumes that the base station determines to apply conventional PDU discarding for a PDU set for which a PDU set integrated handling parameter is not configured. FIG. 12 and FIG. 13 illustrate respective operations of a base station and a UE, based on the embodiment of FIG. 11. As mentioned above, another embodiment in which the base station configures a PDCP SDU discarding option by considering both a PDU set integrated handling parameter and a PDU set importance parameter is also possible, and the UE may perform PDU set discarding or conventional PDU discarding for a PDU set according to the configuration of the base station.

FIG. 12 illustrates an operation of a base station configuring a PDU set discarding operation or a PDU discarding operation for a PDCP layer, based on a PDU set integrated handling configuration and a PDU set importance configuration according to an embodiment of the disclosure.

Referring to FIG. 12, a base station may determine PDU set integrated handling configuration information or a PDU set integrated handling configuration indicator for a PDU set in operation 1200. The PDU set integrated handling configuration information for the PDU set may be obtained from 5QI information of the PDU set or obtained from QoS flow configuration information transferred from a core network to the base station. The base station may determine whether PDU set integrated handling is configured for the PDU set in operation 1202. If the base station determines that PDU set integrated handling is configured for the PDU set, the base station may determine whether to apply a PDU set importance configuration to configure a PDCP SDU discarding option in operation 1204. If the base station determines to apply a PDU set importance configuration to configure a PDCP SDU discarding option, the base station may configure a PDU set importance criterion for applying PDU set discarding in option 1206. The embodiment of operation 904 may be referenced for an operation of processing a PDU set importance criterion for applying PDU set discarding by the base station in operation 1206. The base station may configure PDCP configuration information of the case of applying PDU set discarding and configure PDCP configuration information of the case of applying conventional PDU discarding in operation 1208, and transfer the PDCP configuration information to a UE in operation 1210. The PDCP configuration information in operation 1210 may include at least one or a combination of a DRB corresponding to the PDU set, a PDU set importance reference value (importance_threshold, a criterion for determining importance when PDU set importance is represented as an integer value (e.g., 1 to 8)), an importance criterion for applying PDU set discarding (a configuration mapped to high/low or presence/absence), discardTimer4PDUSet to be applied in PDU set discarding, an importance criterion for applying conventional PDU discarding (a configuration mapped to high/low or presence/absence), and discardTimer to be applied in conventional PDU discarding. For example, when it is determined to use PDU set importance to apply PDU set discarding, the mapping relation between a PDU set importance value and discardTimer4PDUset to be used in PDU set discarding and/or the mapping relation between a PDU set importance value and discardTimer to be used in conventional PDU discarding may be transferred as PDCP configuration information. PDCP configuration information may include a DRB list, and if PDU set importance is determined for each DRB in advance, there is no need to map a PDU set importance value and a discard timer parameter, and PDCP configuration information including discardTimer4PDUset to be used in PDU set discarding or discardTimer to be used in conventional PDU discarding may be transferred to the UE.

The base station may determine not to apply PDU set discarding, based on PDU set importance according to the determination in operation 1204, determine to apply conventional PDU discarding for the PDU set in operation 1212, and configure PDCP configuration information. The base station may proceed to operation 1210, configure PDCP configuration information, and transfer same to the UE. The PDCP configuration information may include at least one or a combination of a DRB corresponding to the PDU set, and discardTimer required for applying conventional PDU discarding for the DRB.

The base station may determine that PDU set integrated handling is not configured for the PDU set in operation 1202, and may configure applying of conventional PDU discarding for the PDU set in operation 1212. The base station may configure PDCP configuration information to be used for the PDU set and transfer same to the UE in operation 1210. The PDCP configuration information may include at least one or a combination of a DRB corresponding to the PDU set, and discardTimer required for applying conventional PDU discarding for the DRB.

FIG. 13 illustrates an operation of a UE determining whether to perform a PDU set discarding operation or a PDU discarding operation on a PDCP layer, based on a PDU set integrated handling configuration and a PDU set importance configuration according to an embodiment of the disclosure.

Referring to FIG. 13, a UE may obtain PDCP configuration information from a base station in operation 1300. The PDCP configuration information in operation 1300 may include at least one or a combination of a DRB corresponding to a PDU set, information indicating application of PDU set discarding, discardTimer4PDUSet, discardTimer, an importance criterion for applying PDU set discarding, an importance criterion for applying conventional PDU discarding, and a PDU set importance reference value (importance_threshold). The UE may determine whether a PDU set discarding configuration is included in the PDCP configuration information of operation 1300 in operation 1302. The PDU set discarding configuration may include, for example, information indicating application of PDU set discarding, discardTimer4PDUSet information, an importance criterion for applying PDU set discarding, a PDU set importance reference value (importance_threshold), and an importance criterion for applying conventional PDU discarding. If the UE determines that a PDU set discarding configuration is included, the UE may determine whether a PDU set importance configuration for applying PDU set discarding is included in operation 1304. PDU set importance configuration information may include, for example, an importance criterion for applying PDU set discarding, a PDU set importance reference value (importance_threshold), and an importance criterion for applying conventional PDU discarding. The UE may determine whether a PDU set associated with a corresponding DRB satisfies an importance criterion for applying PDU set discarding in operation 1306. As an embodiment, importance information of the PDU set may be indicated in a header (e.g., RTP header/extension header) of the PDU set transferred from the application layer to the SDAP layer. As an embodiment, if the importance criterion for applying PDU set discarding for the PDU set is configured to be "high importance" in the PDCP configuration information, the UE may determine whether PDU set importance corresponding to the PDU set associated with the corresponding DRB is "high importance." As an embodiment, if the importance criterion for applying PDU set discarding for the PDU set is configured to be "importance>3" in the PDCP configuration information, the UE may determine that the PDU set importance of a PDU set configured to have an integer value greater than 3 as a PDU set importance value is "high importance." As an embodiment, if the PDU set importance reference value (importance_threshold) for applying PDU set discarding is configured to be 3 in the PDCP configuration information, the UE may determine that a PDU set configured to have an integer value greater than 3 (or equal to or greater than 3) as a PDU set importance value satisfies a condition for applying PDU set discarding. The UE may apply PDU set discarding for the PDU set of the DRB satisfying the importance criterion for applying PDU discarding according to the determination in operation 1306, in operation 1308. An example of the UE operation of operation 1308 may correspond to FIG. 4B or FIG. 4C. The UE may apply conventional PDU discarding for the PDU set of the DRB not satisfying the importance criterion for applying PDU set discarding according to the determination in operation 1306, in operation 1310. An example of the UE operation of operation 1310 may correspond to FIG. 4A. If it is determined that a PDU set importance configuration for applying PDU set discarding is not included according to the determination in operation 1304, the UE may apply conventional PDU discarding for a PDU set associated with the DRB in operation 1310. If it is determined that a configuration for applying PDU set discarding is not included according to the determination in operation 1302, the UE may apply conventional PDU discarding for a PDU set associated with the DRB in operation 1310.

According to an embodiment of the disclosure, PDU set importance may be used as a criterion for configuring a discard timer value used for performing PDCP SDU discarding at the PDCP entity of a UE/base station. PDU set importance configuration information is a parameter which may be indicated in a header (e.g., GTP-U header or RTP header/extension header) of a PDU set, and may be represented as high/low importance, as importance presence/absence, or as an integer value (e.g., 1 to 8). If importance is represented as an integer value, a reference value (importance_threshold) for determining that the importance of a PDU set is high may be configured. For example, a short discard timer may be configured for PDUs belonging to a PDU set determined to have high PDU set importance so as to enable the PDUs to be quickly processed at the PDCP entity. For example, a short discard timer may be configured at the PDCP entity for PDUs belonging to a PDU set determined to have low PDU set importance so as to lower the transmission opportunity of the PDUs in a network congestion situation. That is, PDUs belonging to a PDU set having low importance do not obtain a transmission opportunity on the MAC layer and may be processed to be discarded on the PDCP layer due to the expiration of the discard timer on the PDCP layer.

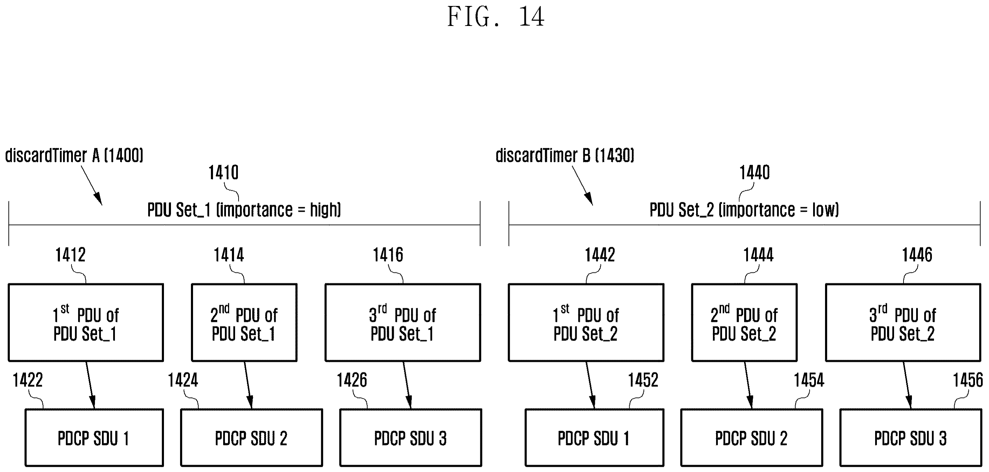

FIG. 14 illustrates a PDU discarding operation on a PDCP layer according to a PDU set importance configuration in an embodiment of the disclosure.

Referring to FIG. 14, PDU Set_1 1410 is a PDU set configured to have high PDU set importance (or determined based on importance_threshold), and PDU Set_1 1410 may be configured by PDUs 1412, 1414, and 1416. The PDUs 1412, 1414, and 1416 of PDU Set_1 1410 may be mapped to PDCP SDU 1422, 1424, and 1426. The base station may configure conventional PDU-based discarding to be performed for PDU Set_1 1410 configured (or determined) to have high PDU set importance, and PDCP config information of a DRB corresponding to PDU Set_1 1410 may include a discardTimerA 1400.

PDU Set_2 1440 is a PDU set configured to have low PDU set importance (or determined based on importance_threshold), and PDU Set_2 1440 may be configured by PDUs 1442, 1444, and 1446. The PDUs 1442, 1444, and 1446 of PDU Set_2 1440 may be mapped to PDCP SDU 1452, 1454, and 1456. The base station may configure conventional PDU-based discarding to be performed for PDU Set_2 1440 configured (or determined) to have low PDU set importance, and PDCP config information of a DRB corresponding to PDU Set_2 1440 may include a discardTimerB 1430.

The embodiment of FIG. 4A may be referenced for conventional PDU-based discarding performed by the PDCP entities of a UE and the base station by using discardTimer A and/or discardTimer B according to PDU set importance. For example, in a case where timer parameters (e.g., discardTimer A and/or discardTimer B) related to a discarding operation of a random PDU (or PDCP SDU) are configured for a PDCP entity of a traffic flow associated with PDU set X and a particular DRB mapped to the traffic flow according to PDU set importance, when the PDCP entity receives each of the PDCP SDUs corresponding to the PDUs of PDU set X from an upper layer, the PDCP entity may start a timer (discardTimer A or discardTimer B) of each PDCP SDU configured for the DRB, with respect to the corresponding PDCP SDU according to the importance of PDU set X. If the timer expires before the transmission of a PDCP SDU is successful, the PDCP entity may give up the transmission and abandon the PDCP SDU. In addition, when a PDCP SDU has already been transferred to a lower layer for transmission, the PDCP entity may indicate the lower layer to abandon a PDCP PDU corresponding to the PDCP SDU.

Determining the level of the importance of the PDU set or determining whether the PDU set corresponds to high importance or low importance may follow the internal implementations of the UE and the base station regardless of a particular configuration and/or threshold value.

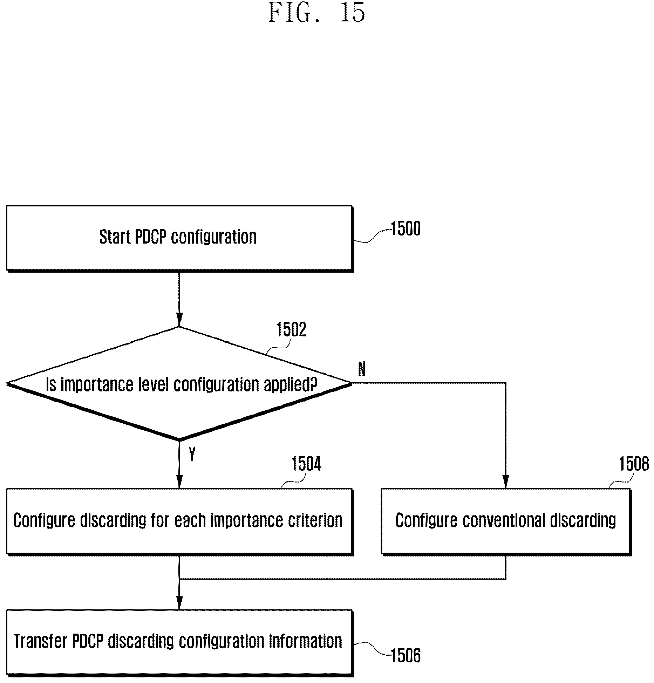

FIG. 15 illustrates an operation of a base station configuring a PDU discarding operation for a PDCP layer, based on a PDU set importance configuration according to an embodiment of the disclosure.

Referring to FIG. 15, a base station may determine to configure PDCP configuration information for a DRB corresponding to a PDU set in operation 1500. The base station may determine whether to configure PDCP configuration information, based on a PDU set importance configuration of the PDU set in operation 1502.

According to the determination in operation 1502, when the base station is to configure PDCP configuration information, based on a PDU set importance configuration, the base station may configure a PDU set importance criterion in operation 1504.

As an embodiment of the PDU set importance criterion to be applied by the base station in operation 1504, the base station may configure a discard timer value (e.g., discardTimerB) to be used when PDCP SDU discarding (or conventional PDU discarding) is applied for a PDU set having low importance, and may configure a discard timer value (e.g., discardTimerA) to be used when PDCP SDU discarding (or conventional PDU discarding) is applied for a PDU set having high importance. A configuration of the PDU set importance criterion may be determined based on the implementation of the base station or a network policy configured in the base station. Here, the value of discardTimerB may be equal to or smaller than the value of discardTimerA.

The base station may configure PDCP configuration information to be applied to the PDU set and transfer same to a UE in operation 1506. The PDCP configuration information in operation 1506 may include at least one or a combination of a DRB corresponding to the PDU set, a PDU set importance reference value (importance_threshold, a criterion for determining importance when PDU set importance is represented as an integer value (e.g., 1 to 8)), an importance criterion of the PDU set (a configuration mapped to high/low or presence/absence), and one or more discard timer values (discardTimer) to be applied according to the PDU set importance criterion. PDCP configuration information may include a DRB list, and if PDU set importance is determined for each DRB in advance, PDCP configuration information including discardTimer corresponding to a PDU set importance value may be transferred to the UE.

The base station may determine not to configure PDCP configuration information, based on PDU set importance according to the determination in operation 1502, and configure the same PDCP configuration information as used when conventional PDCP SDU discarding is applied in operation 1508. The base station may proceed to operation 1506, configure PDCP configuration information, and transfer same to the UE. The PDCP configuration information may include at least one or a combination of a DRB corresponding to the PDU set, and discardTimer required for applying conventional PDU discarding for the DRB.

The UE having received the PDCP configuration information may perform a PDU discarding operation as described with reference to FIG. 14.

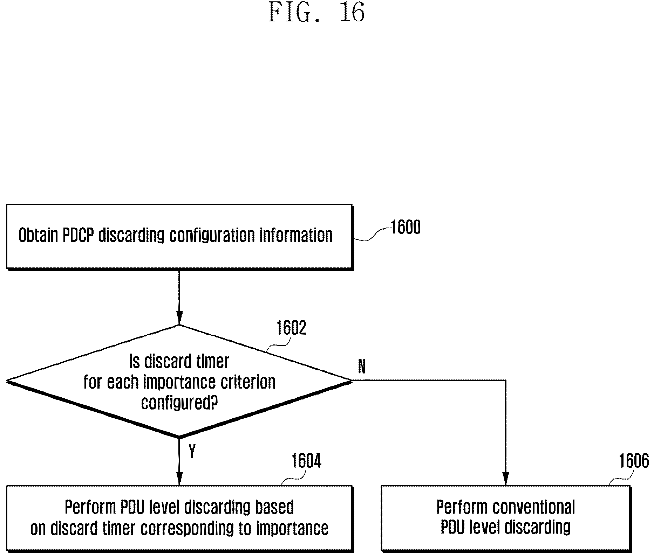

FIG. 16 illustrates an operation of a UE performing a PDU discarding operation on a PDCP layer, based on a PDU set importance configuration according to an embodiment of the disclosure.

Referring to FIG. 16, a UE may obtain PDCP configuration information from a base station in operation 1600. The description of FIG. 15 may be referenced for an operation of the base station determining the PDCP configuration information. For example, the PDCP configuration information in operation 1600 may include at least one or a combination of a DRB corresponding to a PDU set, information indicating application of PDU set discarding, a PDU set importance reference value (importance_threshold), and one or more discard timer values (discardTimer) and a list of PDU set importance criteria for applying discardTimers.

The UE may determine whether PDU set importance and a discardTimer configuration mapped thereto are included in the PDCP configuration information of operation 1600 in operation 1602.

If PDU set importance and a discardTimer configuration mapped thereto are included in the PDCP configuration information according to the determination in operation 1602, the UE may determine the importance of a PDU set associated with a corresponding DRB and a discardTimer (discardTimer A or discardTimer B in FIG. 15) mapped to the PDU set accordingly in operation 1604.

The UE may apply conventional PDU discarding for the PDUs belonging to the PDU set by using the discardTimer in operation 1604. If it is unable to determine the importance of a PDU set associated with a corresponding DRB in operation 1604, for example, if PDU set importance is not represented for the PDU set, the UE may apply conventional PDU discarding for the PDUs belonging to the PDU set by using a default discardTimer, or apply conventional PDU discarding for the PDUs belonging to the PDU set by using a discardTimer configured to be applied to normal PDUs rather than PDU sets. As an embodiment, importance information of the PDU set may be indicated in a header (e.g., RTP header/extension header) of the PDU set transferred from the application layer to the SDAP layer. As an embodiment, if the importance criterion for the PDU set is configured to be "high importance" in the PDCP configuration information, the UE may determine whether PDU set importance corresponding to the PDU set associated with the corresponding DRB is "high importance." As an embodiment, if the importance criterion for the PDU set is configured to be "importance>3" in the PDCP configuration information, the UE may determine that the PDU set importance of a PDU set configured to have an integer value greater than 3 as a PDU set importance value is "high importance." As an embodiment, if the PDU set importance reference value (importance_threshold) is configured to be 3 in the PDCP configuration information, the UE may determine that a mapped discardTimer is applicable for a PDU set configured to have an integer value greater than 3 (or equal to or greater than 3) as a PDU set importance value.

If it is determined that PDU set importance and a discardTimer configuration mapped thereto are not included and a discardTimer configuration for a DRB corresponding to the PDU set is included according to the determination in operation 1602, the UE may apply conventional PDU discarding for the PDUs belonging to the PDU set corresponding to the DRB by using a discardTimer in operation 1606.

The UE having determined discardTimer(s) to be applied may perform a PDU discarding operation as described with reference to FIG. 14.

Additionally, when a particular number of PDUs among PDUs configuring a PDU set are abandoned (or discarded) due to expiration of a discard timer or a particular number of PDUs are successfully transmitted, a PDCP layer may perform a PDU set discarding operation of abandoning the remaining PDUs configuring the PDU set so as to efficiently use wireless resources. The description of FIG. 4A to 4C may be referenced for a configuration for the PDU set discarding operation.

For example, a discarding threshold may be configured for a DRB corresponding to a PDU set, and the discarding threshold may be configured based on the number of PDCP SDUs having been discarded due to the expiration of a discard timer in a single PDU set, or may be configured based on the number of PDCP SDUs having been successfully transmitted in a single PDU set. If it is determined that the number of PDCP SDUs having been discarded due to the expiration of a discard timer satisfies a discarding threshold condition with respect to a DRB corresponding to a particular PDU set, a PDCP entity may discard the remaining PDCP SDUs belonging to the PDU set. Alternatively, if it is determined that the number of PDCP SDUs having been successfully transmitted satisfies a discarding threshold condition with respect to a DRB corresponding to a particular PDU set, a PDCP entity may discard the remaining PDCP SDUs belonging to the PDU set. The discard timer may be applied for each PDU, that is, each PDCP SDU, or may be applied for each PDU set.

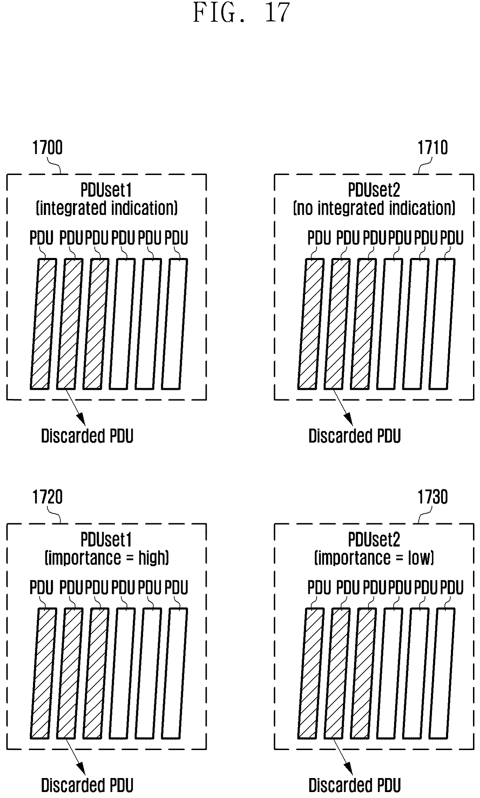

Referring to FIG. 17 to FIG. 21, an operation of a UE and a base station discarding a PDCP SDU at a PDCP entity by considering a discarding threshold condition is described.

FIG. 17 illustrates a PDU set discarding operation on a PDCP layer according to a PDU set integrated handling configuration and a PDU set importance configuration according to an embodiment of the disclosure.

Referring to FIG. 17, a PDU setl 1700 may be a set of PDUs requiring PDU set integrated handling. A PDCP entity may be configured to perform PDU set discarding when a particular number of PDUs are discarded due to the expiration of a discard timer or a particular number of PDUs are successfully transmitted, based on a discarding threshold configured for a DRB corresponding to the PDU set requiring PDU set integrated handling. A PDU set2 1710 may be a set of PDUs not requiring PDU set integrated handling. The PDCP entity may be configured to perform PDU set discarding when a particular number of PDUs are discarded due to the expiration of a discard timer or a particular number of PDUs are successfully transmitted, based on a discarding threshold configured for a DRB corresponding to the PDU set not requiring PDU set integrated handling. A PDU set3 1720 may be a set of PDUs having high PDU set importance. The PDCP entity may be configured to perform PDU set discarding when a particular number of PDUs are discarded due to the expiration of a discard timer or a particular number of PDUs are successfully transmitted, based on a discarding threshold configured for a DRB corresponding to the PDU set having high PDU set importance. A PDU set4 1730 may be a set of PDUs having low PDU set importance. The PDCP entity may be configured to perform PDU set discarding when a particular number of PDUs are discarded due to the expiration of a discard timer or a particular number of PDUs are successfully transmitted, based on a discarding threshold configured for a DRB corresponding to the PDU set having low PDU set importance.

The embodiments of FIG. 3 to FIG. 16 may be referenced for a description relating to whether a PDU discarding operation is performed for each of the PDUs in the PDU set and a detailed operation of PDU discarding.

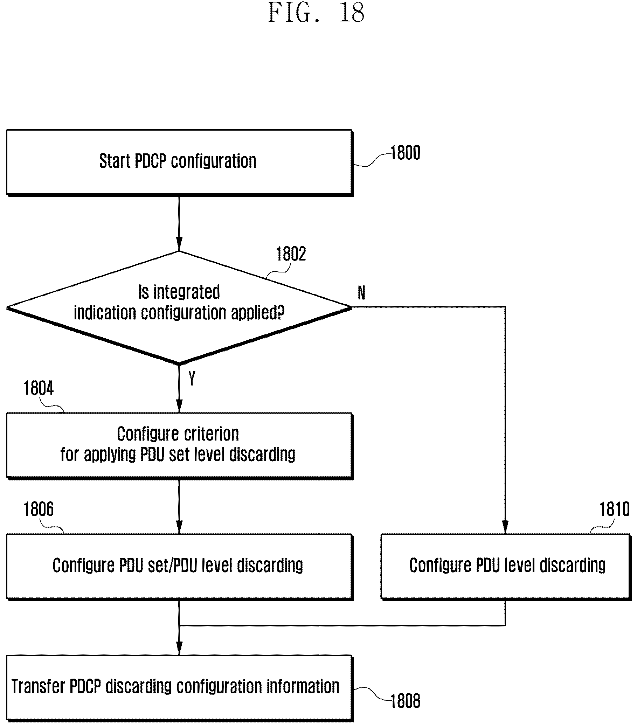

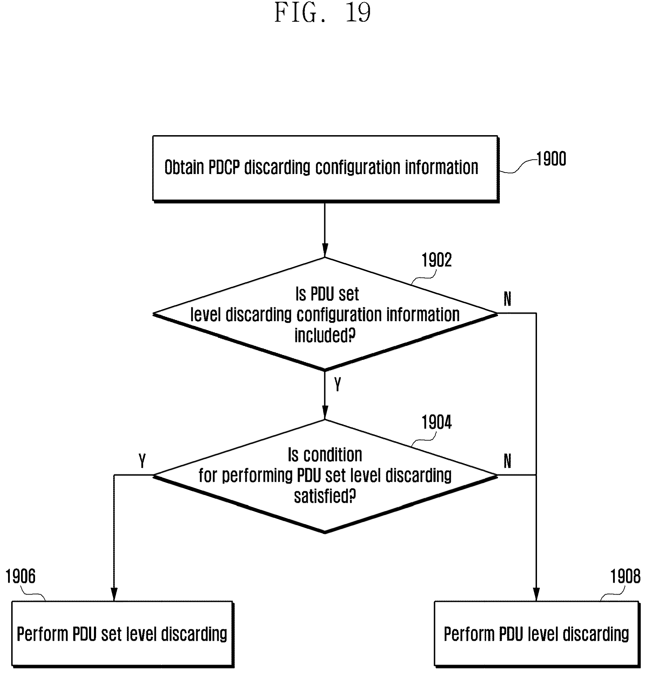

With reference to FIG. 18 and FIG. 19, an operation of a base station and a UE capable of performing PDU set discarding, based on a PDU set integrated handling configuration and a discarding threshold configuration as for PDU set1 1700 and PDU set2 1710 in FIG. 17 is described.

FIG. 18 illustrates an operation of a base station configuring a PDU set discarding operation for a PDCP layer, based on a PDU set integrated handling configuration and a discarding threshold configuration according to an embodiment of the disclosure.

Referring to FIG. 18, a base station may configure PDCP configuration information for a particular DRB in operation 1800. The base station may determine whether to process a PDCP SDU discarding configuration by applying a PDU set integrated handling configuration of a PDU set corresponding to the particular DRB in operation 1802. If the base station determines to process a PDCP SDU discarding configuration by applying a PDU set integrated handling configuration, the base station may determine criteria of a discarding threshold configuration and a PDU set integrated handling configuration for applying PDU set discarding in operation 1804. For example, the base station may configure PDU set discarding to be performed for a PDU set for which PDU set integrated handling is configured if the PDU set satisfies a discarding threshold criterion. For example, the base station may configure PDU set discarding to be performed for a PDU set for which PDU set integrated handling is not configured if the PDU set satisfies a discarding threshold criterion. A criterion for determining PDU set discarding by the base station according to a PDU set integrated handling configuration may be determined according to the implementation of the base station or a policy transferred from a core network to the base station. The base station may configure PDCP configuration information for applying PDU set discarding and PDCP configuration information for applying conventional PDU discarding according to the criteria of a discarding threshold configuration and a PDU set integrated handling configuration in operation 1806. The base station may transfer the PDCP configuration information including PDCP SDU discarding configuration information of operation 1806 to a UE in operation 1808. The PDCP configuration information in operation 1808 may include at least one or a combination of a DRB corresponding to each PDU set (one or more DRBs may be included), a PDU set discarding application indicator, a discarding threshold parameter for applying PDU set discarding, a discardTimer4PDUSet parameter for performing PDU set discarding (or a discardTimer may be configured to be applied at the time of PDU set discarding), and a discardTimer parameter for performing conventional PDU discarding. If the base station determines not to process a PDCU SDU discarding configuration by applying a PDU set integrated handling configuration according to the determination in operation 1802, the base station may configure PDCP configuration information for applying conventional PDU discarding in operation 1810. The base station may proceed to operation 1808 and transfer the PDCP configuration information including PDCP SDU discarding configuration information to the UE. The PDCP configuration information in operation 1808 may include at least one or a combination of a DRB corresponding to each PDU set (one or more DRBs may be included) and a discardTimer parameter for conventional PDU discarding.

FIG. 19 illustrates an operation of a UE performing a PDU set discarding operation on a PDCP layer, based on a PDU set integrated handling configuration and a discarding threshold configuration according to an embodiment of the disclosure.

Referring to FIG. 19, a UE may receive PDCP configuration information from a base station in operation 1900. The PDCP configuration information in operation 1900 may include a parameter for performing PDCP SDU discarding. The UE may determine whether PDU set discarding configuration information is included in the PDCP configuration information received in operation 1900 in operation 1902. The PDU set discarding configuration information may include at least one or a combination of a PDU set discarding application indicator, a discarding threshold parameter for applying PDU set discarding, and a discardTimer4PDUSet parameter for performing PDU set discarding (or a discardTimer may be configured to be applied at the time of PDU set discarding). If it is determined that the PDU set discarding configuration information is included according to the determination in operation 1902, the UE may determine whether a PDU set associated with a corresponding DRB satisfies a discarding threshold for performing PDU set discarding in operation 1904. The UE may perform PDU set discarding on a PDU set satisfying a PDU set discarding condition in operation 1906. By referring to the example of FIG. 17, if PDU set discarding is configured to be performed when PDU set1 1700 satisfies a discarding threshold, and the discarding threshold is configured to be 3, the UE may determine whether the PDUs belonging to PDU set1 1700 are successfully transmitted. If the number of the PDUs having failed to be successfully transmitted is determined to be greater than 3 that is the discarding threshold (or is determined to be equal to or greater than 3), the UE may determine that a PDU set discarding condition is satisfied, and perform PDU set discarding to discard the remaining PDUs belonging to PDU set1 1700. When the UE determine whether the PDUs belonging to PDU set1 1700 are successfully transmitted, the UE may apply a discard timer configured for PDU set1 1700 to each of the PDUs as in the example of FIG. 4B, or to the entirety of PDU set1 1700 as the example of FIG. 4C. The discard timer may correspond to discardTimer4PDUSet or discardTimer, and which discard timer is to be used may follow a configuration of the base station. If it is determined that a PDU set fails to satisfy a PDU set discarding condition according to the determination in operation 1904, the UE may perform conventional PDU discarding for the PDU set in operation 1908. By referring to the example of FIG. 17, if PDU set discarding is configured to be performed when PDU set1 1700 satisfies a discarding threshold, and the discarding threshold is configured to be 3, the UE may determine whether the PDUs belonging to PDU set1 1700 have been successfully transmitted. If the number of the PDUs having failed to be successfully transmitted is determined to be smaller than 3 that is the discarding threshold (or is determined to be equal to or smaller than 3), the UE may determine that a PDU set discarding condition is not satisfied, and perform conventional PDU discarding to discard the PDUs belonging to PDU set1 1700. When the UE determine whether the PDUs belonging to PDU set1 1700 have been successfully transmitted, the UE may apply a discard timer configured for PDU set1 1700 to each of the PDUs as in the example of FIG. 4B, or to the entirety of PDU set1 1700 as the example of FIG. 4C. The discard timer may correspond to discardTimer4PDUSet or discardTimer, and which discard timer is to be used may follow a configuration of the base station. By referring to the example of FIG. 17, the base station may not configure PDCP configuration information for performing PDU set discarding for a DRB corresponding to PDU set2 1710 not satisfying a PDU set integrated handling configuration condition, and may configure PDCP configuration information for performing conventional PDU discarding. The UE may receive, from the base station, the PDCP configuration information for performing conventional PDU discarding for the DRB corresponding to PDU set2 1710 not satisfying the PDU set integrated handling configuration condition, and perform conventional PDU discarding for the PDUs belonging to PDU set2 1710. If it is determined that the PDU set discarding configuration information is not included according to the determination in operation 1902, the UE may perform conventional PDU discarding for a PDU set associated with the DRB in operation 1908.

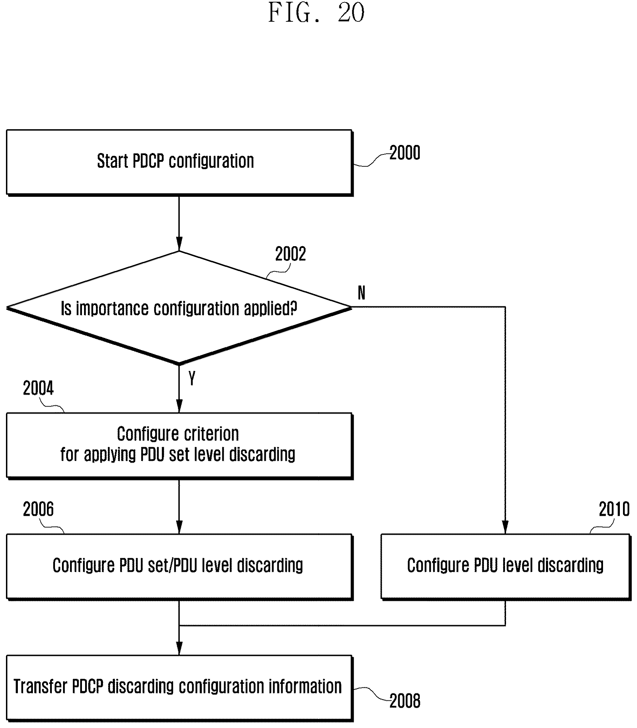

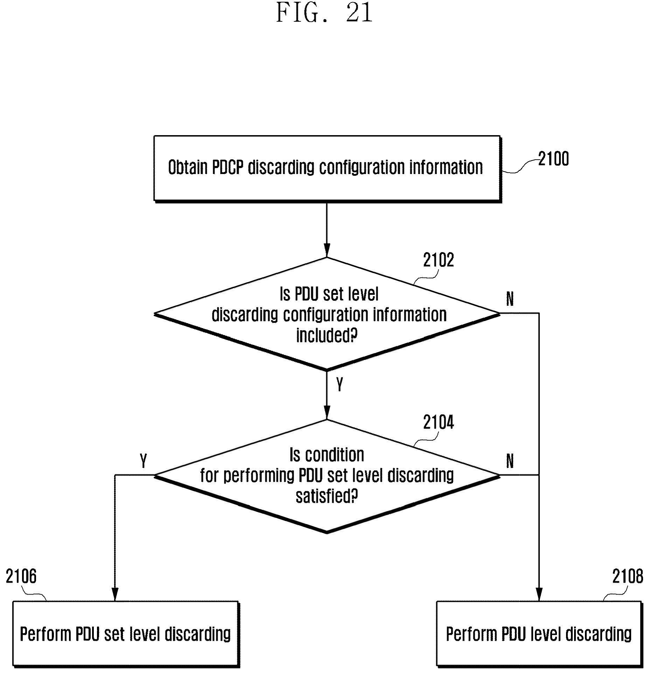

FIG. 20 and FIG. 21 illustrate an operation of a base station and a UE capable of performing PDU set discarding, based on a PDU set importance configuration and a discarding threshold configuration as for PDU set1 1720 and PDU set2 1730 in FIG. 17.

FIG. 20 illustrates an operation of a base station configuring a PDU set discarding operation for a PDCP layer, based on a PDU set importance configuration and a discarding threshold configuration according to an embodiment of the disclosure.

Referring to FIG. 20, a base station may configure PDCP configuration information for a particular DRB in operation 2000. The base station may determine whether to process a PDCP SDU discarding configuration by applying a PDU set importance configuration of a PDU set corresponding to the particular DRB in operation 2002. If the base station determines to process a PDCP SDU discarding configuration by applying PDU set importance, the base station may determine criteria of a discarding threshold configuration and a PDU set importance configuration for applying PDU set discarding in operation 2004. For example, the base station may configure PDU set discarding to be performed for a PDU set configured to have high PDU set importance if the PDU set satisfies a discarding threshold criterion. For example, the base station may configure PDU set discarding to be performed for a PDU set not configured to have high PDU set importance if the PDU set satisfies a discarding threshold criterion. A criterion for determining PDU set discarding by the base station according to a PDU set importance configuration may be determined according to the implementation of the base station or a policy transferred from a core network to the base station. The base station may configure PDCP configuration information for applying PDU set discarding and PDCP configuration information for applying conventional PDU discarding according to the criteria of a discarding threshold configuration and a PDU set importance configuration in operation 2006. The base station may transfer the PDCP configuration information including PDCP SDU discarding configuration information of operation 2006 to a UE in operation 2008. The PDCP configuration information in operation 2008 may include at least one or a combination of a DRB corresponding to each PDU set (one or more DRBs may be included), a PDU set discarding application indicator, a discarding threshold parameter for applying PDU set discarding, a PDU set importance criterion for applying PDU set discarding, an importance threshold parameter for determining PDU set importance (this parameter may be used to determine a PDU set importance criterion for applying PDU set discarding when PDU set importance is represented as an integer value, e.g., 1 to 8), a discardTimer4PDUSet parameter for performing PDU set discarding (or a discardTimer may be configured to be applied at the time of PDU set discarding), and a discardTimer parameter for performing conventional PDU discarding. The discarding threshold parameter for applying PDU set discarding may be configured for each PDU set importance criterion, and a discarding threshold may vary according to PDU set importance. The discarding threshold parameter for applying PDU set discarding may be configured only for a particular PDU set importance criterion, and a discarding threshold may be configured to be applied for a PDU set satisfying the PDU set importance criterion. If the base station determines not to process a PDCU SDU discarding configuration by applying PDU set importance according to the determination in operation 2002, the base station may configure PDCP configuration information for applying conventional PDU discarding in operation 2010. The base station may proceed to operation 2008 and transfer the PDCP configuration information including PDCP SDU discarding configuration information to the UE. The PDCP configuration information in operation 2008 may include at least one or a combination of a DRB corresponding to each PDU set (one or more DRBs may be included) and a discardTimer parameter for conventional PDU discarding.

FIG. 21 illustrates an operation of a UE performing a PDU set discarding operation on a PDCP layer, based on a PDU set importance configuration and a discarding threshold configuration according to an embodiment of the disclosure.

Referring to FIG. 21, a UE may receive PDCP configuration information from a base station in operation 2100. The PDCP configuration information in operation 2100 may include a parameter for performing PDCP SDU discarding. The UE may determine whether PDU set discarding configuration information is included in the PDCP configuration information received in operation 2100 in operation 2102. The PDU set discarding configuration information may include at least one or a combination of a PDU set discarding application indicator, a discarding threshold parameter for applying PDU set discarding, a PDU set importance criterion for applying PDU set discarding, an importance threshold parameter for determining PDU set importance, and a discardTimer4PDUSet parameter for performing PDU set discarding (or a discardTimer may be configured to be applied at the time of PDU set discarding). If it is determined that the PDU set discarding configuration information is included according to the determination in operation 2102, the UE may determine whether a PDU set associated with a corresponding DRB satisfies a PDU set importance criterion and a discarding threshold criterion for performing PDU set discarding in operation 2104. The UE may perform PDU set discarding on a PDU set satisfying a PDU set discarding condition in operation 2106. By referring to the example of FIG. 17, under the assumption that a PDU set importance criterion for applying PDU set discarding is "high importance", if PDU set discarding is configured to be performed when PDU set1 1720 satisfying the PDU set importance criterion satisfies a discarding threshold, and the discarding threshold is configured to be 3, the UE may determine whether the PDUs belonging to PDU set1 1720 have been successfully transmitted. If the number of the PDUs having failed to be successfully transmitted is determined to be greater than 3 that is the discarding threshold (or is determined to be equal to or greater than 3), the UE may determine that a PDU set discarding condition is satisfied, and perform PDU set discarding to discard the remaining PDUs belonging to PDU set1 1720. When the UE determine whether the PDUs belonging to PDU set1 1720 have been successfully transmitted, the UE may apply a discard timer configured for PDU set1 1720 to each of the PDUs as in the example of FIG. 4B, or to the entirety of PDU set1 1720 as the example of FIG. 4C. The discard timer may correspond to discardTimer4PDUSet or discardTimer, and which discard timer is to be used may follow a configuration of the base station. If it is determined that a PDU set fails to satisfy a PDU set discarding condition according to the determination in operation 2104, the UE may perform conventional PDU discarding for the PDU set in operation 2108. By referring to the example of FIG. 17, if PDU set discarding is configured to be performed when PDU set1 1720 satisfying the PDU set importance criterion satisfies a discarding threshold, and the discarding threshold is configured to be 3, the UE may determine whether the PDUs belonging to PDU set1 1720 are successfully transmitted. If the number of the PDUs having failed to be successfully transmitted is determined to be smaller than 3 that is the discarding threshold (or is determined to be equal to or smaller than 3), the UE may determine that a PDU set discarding condition is not satisfied, and perform conventional PDU discarding to discard the PDUs belonging to PDU set1 1720. When the UE determine whether the PDUs belonging to PDU set1 1720 have been successfully transmitted, the UE may apply a discard timer configured for PDU set1 1720 to each of the PDUs as in the example of FIG. 4B, or to the entirety of PDU set1 1720 as the example of FIG. 4C. The discard timer may correspond to discardTimer4PDUSet or discardTimer, and which discard timer is to be used may follow a configuration of the base station. By referring to the example of FIG. 17, the UE may determine that PDU set2 1730 not satisfying a PDU set importance condition and configured to have "low importance" does not satisfy a PDU set discarding condition, and perform conventional PDU discarding for the PDUs belonging to PDU set2 1730. If it is determined that the PDU set discarding configuration information is not included according to the determination in operation 2102, the UE may perform conventional PDU discarding for a PDU set associated with the DRB in operation 2108. When the UE is unable to determine the PDU set importance of a PDU set or the PDU set importance of a PDU set is not configured, the UE may apply conventional PDU discarding for the PDUs included in the PDU set.

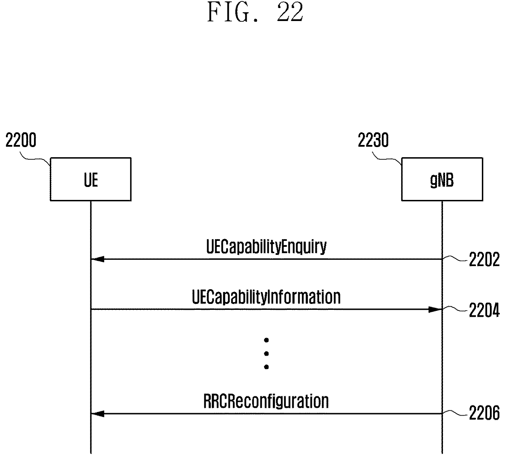

FIG. 22 illustrates a signaling procedure between a UE and a base station for configuring a PDU set discarding operation on a PDCP layer of the UE according to an embodiment of the disclosure.

Referring to operation 22, in operation 2202, a gNB 2230 may transfer a UE capability request (UECapabilityEnquiry) message that requests a capability report from a UE 2200 being in a connected state. The gNB 2230 may include a UE capability request for each RAT type in the UECapabilityEnquiry message. The request for each RAT type may include requested frequency band information. In addition, when the gNB 2230 requests the UE 2200 to generate a UECapabilityInformation message in operation 2202, the gNB may include filtering information capable of indicating a condition and a limitation. The gNB 2230 may indicate, through the filtering information, whether the UE 2200 needs to report a capability related to a PDU set discarding operation. The PDU set discarding operation may include a PDCP discarding operation (e.g., a per-PDU set discarding operation for a PDU set, or a conventional per-PDU discarding operation for a PDU set) described in FIG. 3 to FIG. 21. In operation 2204, the UE 2200 may configure a UE capability information (UECapabilityInformation) message corresponding to the UECapabilityEnquiry message of operation 2202, and report a response for the UE capability request to the gNB 2230. A parameter indicating whether the UE 2200 supports a PDU set discarding operation may be included in the UECapabilityInformation message. The gNB 2230 may determine whether the UE 2200 is able to perform a PDU set discarding operation, based on the UECapabilityInformation message received in operation 2204. In operation 2206, if it is determined that the UE 2200 is able to perform a PDU set discarding operation, the gNB 2230 may indicate the UE 2200 to perform a PDU set discarding operation through an RRCReconfiguration message. More specifically, the RRCReconfiguration message for configuring a PDU set discarding operation may include at least one or a combination of the following pieces of configuration information.

DiscardTimer (and/or discardTimer4PDUSet): For data transmission sensitive to delay time, the base station 2230 may configure a discardTimer value for the UE 2200 for a packet discarding operation on the PDCP layer. A separate value may be configured as the discardTimer value for 1) each DRB or 2) each PDU set. In a case of configuring the discardTimer value according to PDU set importance, a PDU set importance value and a discardTimer value mapped thereto may be configured.

PDU set discarding operation configuration indicator: For a PDU set discarding operation configuration, a 1-bit indicator such as "PDU_SetDiscardEnabled" or "PDU_SetDiscard" may be transferred to (or configured for) the UE 2200 through an RRCReconfiguration message. In a case of configuring a PDU set discarding operation for a particular DRB, the indicator may be configured in PDCP-Config corresponding to the DRB.

DRB ID List for PDU set discarding: The base station 2230 may transfer the IDs of DRBs for which a PDU set discarding operation needs to be performed, to the UE 2200 in a type of a list, and the UE 2200 may perform the PDU set discarding operation at PDCP entities corresponding to the DRBs.

Importance _threshold: The base station 2230 may transfer, to the UE 2200, a reference value for determining PDU set importance at which a PDU set discarding needs to be performed. Importance_threshold may be used as a criterion for determining PDU set importance when PDU set importance is represented as an integer value, e.g., 1 to 8.

PDU set importance: The base station 2230 may transfer, to the UE 2200, a configuration of PDU set importance at which a PDU set discarding operation needs to be performed. PDU set importance may be represented as "high/low", "presence/absence", or "important/unimportant."

Discarding Threshold: The base station 2230 may transfer, to the UE 2200, a configuration of a discarding threshold at which a PDU set discarding operation needs to be performed. The discarding threshold may correspond to a threshold value of the number of PDCP SDUs having been discarded due to the expiration of a discard timer in a single PDU set, or a threshold value of the number of PDCP SDUs having been successfully transmitted before the expiration of a discard timer in a single PDU set, and may be used as a reference value for applying PDU set discarding for a PDU set.

As described with reference to the various embodiments of FIG. 3 to FIG. 22, a base station may transfer, to a UE, configuration information used by the UE to determine whether to apply conventional PDU discarding or PDU set discarding as PDCP SDU discarding, through an RRC message (e.g., RRC Setup or RRC Reconfiguration) for configuring PDCP configuration information for a particular DRB.

The base station may configure, for the UE, PDCP SDU discarding including PDU set discarding configuration information so as to apply PDU set discarding when a particular event, such as a network congestion situation, occurs. In this case, other than a method of configuring and applying discarding by using an RRC message, a method of configuring discarding by using an RRC message and indicating application of discarding by using MAC CE signaling (or additional RRC signaling), or a method of configuring discarding and indicating application of same by using MAC CE signaling may be required.

As an embodiment, when an event to apply PDU set discarding, such as a network congestion situation, occurs, the base station may generate configuration information required for PDU set discarding, include same in an RRC message, and transfer the message to the UE. The RRC message may include, for example, at least one or a combination of information of a DRB to which PDU set discarding is to be applied, and a PDU set importance criterion/importance threshold when PDU set discarding needs to be applied based on PDU set importance. When the RRC message including the configuration information required for PDU set discarding is received, the UE may apply PDU set discarding for the PDUs belonging to a PDU set associated with the corresponding DRB according to a PDU set discarding configuration.

As an embodiment, before an event to apply PDU set discarding, such as a network congestion situation, occurs, the base station may generate configuration information required for PDU set discarding, include same in an RRC message, and transfer the message to the UE. The RRC message may include, for example, at least one or a combination of information of a DRB to which PDU set discarding is to be applied, and a PDU set importance criterion/importance threshold when PDU set discarding needs to be applied based on PDU set importance. The UE may receive and store the RRC message including the configuration information required for PDU set discarding. Thereafter, when it is determined that an event to apply PDU set discarding, such as a network congestion situation, has occurred, the base station may indicate applying of PDU set discarding for the PDUs belonging to a PDU set associated with the corresponding DRB according to a PDU set discarding configuration configured in the UE, through MAC CE signaling or additional RRC signaling. When the UE receives an indication of the base station through the MAC CE signaling or additional RRC signaling, the UE may apply PDU set discarding for the PDUs belonging to a PDU set associated with the corresponding DRB according to the PDU set discarding configuration. The MAC CE signaling or additional RRC signaling may be used to indicate PDU set discarding for all DRBs for which PDU set discarding is configured to be performable through an initial RRC message, or indicate PDU set discarding for a particular DRB among the configured DRBs.

In the case of configuring PDU set discarding by using an RRC message and indicating application of the discarding by using MAC CE signaling or additional RRC signaling and the case of configuring PDU set discarding and indicating application of the discarding by using MAC CE signaling, it is obvious that PDU set discarding based on PDU set integrated handling as well as discarding based on PDU set importance may also be configured and indicated to be applied.

According to an embodiment of the disclosure, when PDU set discarding or conventional PDU discarding is configured to be applied according to PDU set importance, processing for the case where the base station and the UE are unable to determine PDU set importance information of a PDU set may be required. For example, when PDU set importance information is not indicated in a PDU header (e.g., GTP-U header) transferred from the application layer to the SDAP layer in a case of downlink traffic or when PDU set importance information is not indicated in a PDU header (e.g., RTP header/extension header) transferred from the application layer to the SDAP layer in a case of uplink traffic, the base station and the UE are unable to determine PDU set importance information of a PDU set. When it is unable to determine the PDU set importance of a PDU set, the base station and the UE may apply conventional PDU discarding. An example of the conventional PDU discarding may include the example of FIG. 4A. The base station may consider the case where it is unable to determine the PDU set importance of a PDU set, and configure and transfer PDCP SDU discarding configuration information enabling the UE to apply conventional PDU discarding for the PDU set. The PDCP SDU discarding configuration information may include a discardTimer parameter.

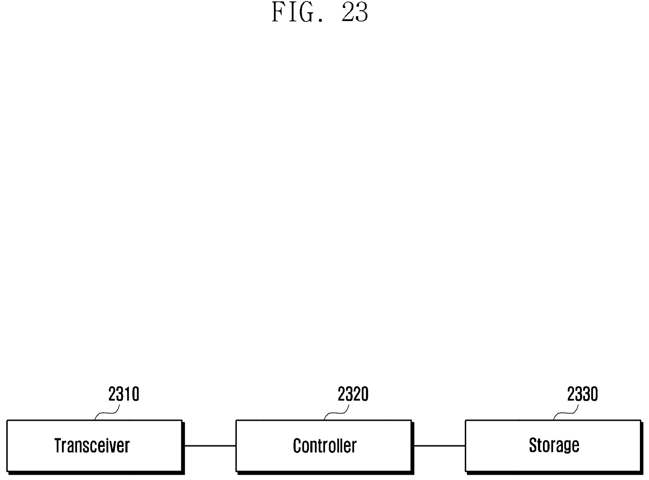

FIG. 23 illustrates a structure of a UE according to an embodiment of the disclosure.

Referring to FIG. 23, the UE may include a transceiver 2310, a controller 2320, and a storage 2330. As used herein, the controller may be defined as a circuit, an application specific integrated circuit, or at least one processor.

The transceiver 2310 may transmit/receive signals with other network entities. The transceiver 2310 may receive, for example, system information, synchronization signals, or reference signals from the base station.

The controller 2320 may control the overall operation of the UE according to the embodiments proposed in the disclosure. For example, the controller 2320 may control signal flows between the respective blocks to perform operations according to the above-described flowcharts. Specifically, the controller 2320 may control the operations proposed herein for PDU set discarding and/or PDU discarding operations according to embodiments of the disclosure.

The storage 2330 may store at least one of information transmitted/received through the transceiver 2310 and information generated through the controller 2320.

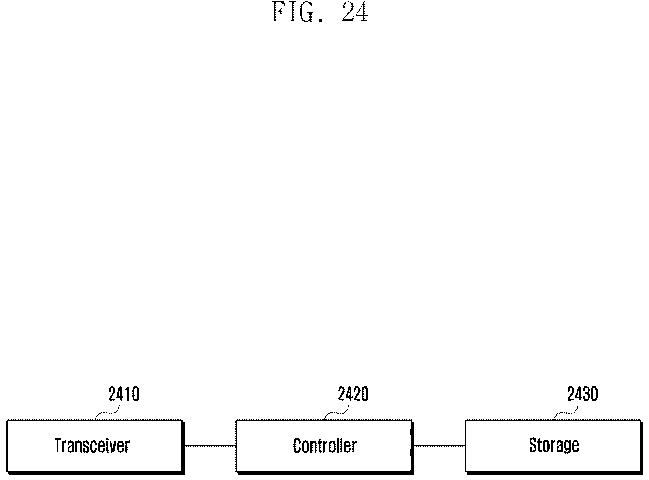

FIG. 24 illustrates a structure of a base station according to an embodiment of the disclosure.

Referring to FIG. 24, the base station may include a transceiver 2410, a controller 2420, and a storage 2430. As used herein, the controller may be defined as a circuit, an application specific integrated circuit, or at least one processor.

The transceiver 2410 may transmit/receive signals with other network entities. The transceiver 2410 may transmit, for example, system information, synchronization signals, or reference signals to UEs.

The controller 2420 may control the overall operation of the base station according to the embodiments proposed in the disclosure. For example, the controller 2420 may control signal flows between the respective blocks to perform operations according to the above-described flowcharts. Specifically, the controller 2420 may control the operations proposed herein for PDU set discarding and/or PDU discarding operations according to embodiments of the disclosure.

The storage 2430 may store at least one of information transmitted/received through the transceiver 2410 and information generated through the controller 2420.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the disclosure, the term "computer program product" or "computer readable medium" is used to generally refer to a medium such as a memory, a hard disk installed in a hard disk drive, or a signal. The "computer program product" or "computer readable medium" is an element that is provided to a method for reporting UE capability in a wireless communication system according to the disclosure.

The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium. As an example, the "non-transitory storage medium" may include a buffer in which data is temporarily stored

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least a part of the computer program product (e.g., a downloadable app) may be temporarily generated or at least temporarily stored in the machine-readable storage medium, such as memory of the manufacturer's server, a server of the application store, or a relay server.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

## Claims

1. A method performed by a terminal in a wireless communication system, the method comprising:
receiving, from a base station, configuration information on a first timer and a second timer for packet data convergence protocol (PDCP) service data unit (SDU) discarding;
obtaining a PDCP SDU from an upper layer of a PDCP entity of the terminal;
in case that a protocol data unit (PDU) set to which the PDCP SDU belongs has low importance, starting the first timer for the PDCP SDU; and
in case that the PDU set does not have low importance, starting the second timer for the PDCP SDU.

2. The method of claim 1, further comprising:
identifying that the first timer or the second timer has expired;
in case that a PDU set discarding operation is configured, discarding all PDCP SDUs belonging to the PDU set; and
in case that the PDU set discarding operation is not configured, discarding the PDCP SDU.

3. The method of claim 1, further comprising receiving, from the base station, a medium access control (MAC) control element (CE) that activates a PDU set importance (PSI)-based SDU discarding operation.

4. The method of claim 1, wherein a duration of the first timer is shorter than a duration of the second timer.

5. A method performed by a base station in a wireless communication system, the method comprising:
generating configuration information on a first timer and a second timer for packet data convergence protocol (PDCP) service data unit (SDU) discarding; and
transmitting the configuration information to a terminal,
wherein, in case that a protocol data unit (PDU) set to which a PDCP SDU of a PDCP entity of the terminal belongs has low importance, the first timer is applied for the PDCP SDU, and
wherein, in case that the PDU set does not have low importance, the second timer is applied for the PDCP SDU.

6. The method of claim 5, wherein, in case that a PDU set discarding operation is configured, all PDCP SDUs belonging to the PDU set are discarded according to expiration of the first timer or the second timer, and
wherein, in case that the PDU set discarding operation is not configured, the PDCP SDU is discarded according to expiration of the first timer or the second timer.

7. The method of claim 5, further comprising transmitting, to the terminal, a medium access control (MAC) control element (CE) that activates a PDU set importance (PSI)-based SDU discarding operation.

8. The method of claim 5, wherein a duration of the first timer is shorter than a duration of the second timer.

9. A terminal of a wireless communication system, the terminal comprising:
a transceiver; and
a controller,
wherein the controller is configured to:
receive, from a base station and through the transceiver, configuration information on a first timer and a second timer for packet data convergence protocol (PDCP) service data unit (SDU) discarding;
obtain a PDCP SDU from an upper layer of a PDCP entity of the terminal;
in case that a protocol data unit (PDU) set to which the PDCP SDU belongs has low importance, start the first timer for the PDCP SDU; and
in case that the PDU set does not have low importance, start the second timer for the PDCP SDU.

10. The terminal of claim 9, wherein the controller is configured to:
identify that the first timer or the second timer has expired;
in case that a PDU set discarding operation is configured, discard all PDCP SDUs belonging to the PDU set; and
in case that the PDU set discarding operation is not configured, discard the PDCP SDU.

11. The terminal of claim 9, wherein the controller is configured to receive, from the base station and through the transceiver, a medium access control (MAC) control element (CE) that activates a PDU set importance (PSI)-based SDU discarding operation.

12. The terminal of claim 9, wherein a duration of the first timer is shorter than a duration of the second timer.

13. A base station of a wireless communication system, the base station comprising:
a transceiver; and
a controller,
wherein the controller is configured to:
generate configuration information on a first timer and a second timer for packet data convergence protocol (PDCP) service data unit (SDU) discarding; and
transmit the configuration information to a terminal through the transceiver,
wherein, in case that a protocol data unit (PDU) set to which a PDCP SDU of a PDCP entity of the terminal belongs has low importance, the first timer is applied for the PDCP SDU, and
wherein, in case that the PDU set does not have low importance, the second timer is applied for the PDCP SDU.

14. The base station of claim 13, wherein, in case that a PDU set discarding operation is configured, all PDCP SDUs belonging to the PDU set are discarded according to expiration of the first timer or the second timer, and
wherein, in case that the PDU set discarding operation is not configured, the PDCP SDU is discarded according to expiration of the first timer or the second timer.

15. The base station of claim 13, wherein the controller is configured to transmit, to the terminal and through the transceiver, a medium access control (MAC) control element (CE) that activates a PDU set importance (PSI)-based SDU discarding operation, and
wherein a duration of the first timer is shorter than a duration of the second timer.
